Europäisches Patentamt

European Patent Office

Office européen des brevets

(19)

(11) Numéro de publication: **0 277 439 B1**

(12)     **FASCICULE DE BREVET EUROPEEN**

(45) Date de publication de fascicule du brevet: **13.05.92**  (51) Int. Cl.⁵: **G11B 5/127**

(21) Numéro de dépôt: **87402844.2**

(22) Date de dépôt: **14.12.87**

(54) **Procédé pour fabriquer un transducteur magnétique comportant plusieurs têtes.**

(30) Priorité: **16.01.87 FR 8700474**

(43) Date de publication de la demande:
**10.08.88 Bulletin 88/32**

(45) Mention de la délivrance du brevet:
**13.05.92 Bulletin 92/20**

(84) Etats contractants désignés:
**AT BE CH DE FR GB IT LI NL SE**

(56) Documents cités:
**WO-A-85/02479**
**JP-A- 5 680 815**
**US-A- 3 648 362**
**US-A- 3 699 619**
**US-A- 4 251 910**

**PATENT ABSTRACTS OF JAPAN, vol. 5, no. 146 (P-80)[818], 16 septembre 1981; & JP-A-56 80 815 (FUJITSU K.K.) 02-07-1981**

**IBM TECHNICAL DISCLOSURE BULLETIN, vol. 25, no. 12, mai 1983, pages 6428-6429, New York, US; R.A. SCRANTON et al.: "MLC technology for print head transducers"**

(73) Titulaire: **BULL S.A.**
**121 avenue de Malakoff P.B. 193.16**
**F-75764 Paris Cédex 16(FR)**

(72) Inventeur: **Raulin, Philippe**
**23, rue du Moulin Frahier**
**F-70400 Hericourt(FR)**
Inventeur: **Cherbuy, Bernard**
**24, rue des Eglantines Essert**
**F-90000 Belfort(FR)**
Inventeur: **Messer, Jean-Pierre**
**Lotissement Communal Sidex 452**
**F-90100 Grosne(FR)**
Inventeur: **Estavoyer, Jacques**
**22, rue principale Argiesans**
**F-90800 Bavillier(FR)**

## Description

La présente invention se rapporte à un procédé pour fabriquer un transducteur magnétique comportant plusieurs têtes. Un tel transducteur trouve tout particulièrement, quoique non exclusivement, son application dans les machines imprimantes magnétiques sans impact.

Les machines imprimantes de ce type, de même que les appareils qui, tels que les mémoires à tambour magnétique ou les unités de disques magnétiques, sont utilisés pour l'enregistrement d'informations, comportent un support d'enregistrement magnétique qui se présente sous des formes diverses, par exemple sous la forme d'un tambour, d'une courroie sans fin ou d'un disque, ce support étant revêtu d'une couche de matière magnétique. L'enregistrement des informations sur ce support est réalisé au moyen d'un organe d'enregistrement appelé transducteur, qui comporte une ou plusieurs têtes d'enregistrement magnétique à proximité desquelles se déplace ce support d'enregistrement. Chacune de ces têtes engendre, chaque fois qu'elle est excitée par un courant électrique d'intensité convenable, un champ magnétique qui a pour effet de créer, sur la surface du support d'enregistrement qui défile devant ces têtes, des domaines magnétisés de petites dimensions, ces domaines, pratiquement ponctuels, étant généralement désignés sous le nom de points magnétisés. La portion de surface du support qui passe ainsi devant chaque tête est désignée habituellement sous le nom de piste d'enregistrement d'informations, le support d'enregistrement comportant, en général, plusieurs pistes qui peuvent être soumises à l'enregistrement, soit individuellement au cours d'opérations d'enregistrement successives, soit simultanément au cours d'une seule opération.

Afin d'obtenir une meilleure délimitation des domaines ou points magnétisés formés sur le support d'enregistrement, on a proposé de magnétiser ce support en utilisant le mode d'enregistrement dit "transversal", c'est-à-dire de manière telle que, dans chacun des domaines magnétisés ainsi formés, l'induction magnétique présentée par chaque domaine soit pratiquement perpendiculaire à la surface de ce support. Un tel mode de magnétisation se révèle particulièrement intéressant dans le cas des machines imprimantes magnétiques où, pour obtenir une image imprimée de haute définition, il est nécessaire d'enregistrer sur le support une image latente magnétique dont les différents points constitutifs sont très petits et très proches les uns des autres. Pour enregistrer cette image latente magnétique, on a utilisé, dans l'art antérieur, un transducteur comprenant une pluralité de têtes magnétiques disposées les unes à côté des autres et alignées suivant une direction perpendiculaire à la direction de déplacement du support d'enregistrement, chacune de ces têtes comportant un mince noyau magnétique sur lequel est bobiné un enroulement d'excitation, ce noyau ayant sensiblement la forme d'un U et étant profilé de manière à présenter, à l'une de ses extrémités, un pôle d'enregistrement relativement étroit, et, à son autre extrémité, un pôle de fermeture du flux, relativement large, ces deux pôles étant placés au contact ou à proximité immédiate de la surface du support d'enregistrement.

Ces têtes permettent d'obtenir sur le support d'enregistrement des points magnétisés parfaitement délimités dont la taille est relativement petite, c'est-à-dire présente, par exemple, sur la surface de ce support, une section carrée de l'ordre de 100 à 200 $\mu$ m de côté. Mais elles ont pour inconvénient de comporter chacune un noyau qui, au cours de la fabrication, doit être usiné avec une très grande précision si l'on veut que les points magnétisés formés par ces différentes têtes aient des tailles sensiblement identiques. En outre, avec ces têtes, le temps nécessaire à la formation d'un point magnétisé sur le support d'enregistrement est toujours relativement long et excède, en général, six microsecondes, ce qui, naturellement, limite les performances de la machine dans laquelle ces têtes sont utilisées. Ces têtes présentent également l'inconvénient de comporter chacune un noyau magnétique dont les faces placées en regard des faces des noyaux voisins ont une surface relativement importante, de sorte que, lorsque, pour augmenter la densité des points magnétisés et améliorer ainsi la qualité des caractères imprimés, on essaie de rapprocher ces têtes les unes des autres, les flux magnétiques engendrés par les têtes excitées donnent lieu à des fuites de flux qui, circulant dans les noyaux des têtes voisines des têtes excitées, provoquent alors la formation, sur la surface du support d'enregistrement, de points magnétisés indésirables.

On a pu remédier à ces inconvénients en faisant appel à des têtes d'enregistrement dont le noyau magnétique, pourvu d'un enroulement d'excitation, a la forme d'une tige ou d'une aiguille, les noyaux de ces têtes ayant chacun une extrémité disposée au moins à proximité immédiate de la surface du support d'enregistrement, ces extrémités étant alignées, les unes à la suite des autres, suivant une direction perpendiculaire à la direction de déplacement du support d'enregistrement. Avec ces têtes, dont le noyau est facile à fabriquer, le temps nécessaire à l'enregistrement d'un point magnétisé ne dépasse pas deux microsecondes. Cependant, la manipulation de ces têtes, leur mise en place à l'intérieur d'un même transducteur, ainsi que le raccordement de leurs enroulements à un circuit électrique de commande extérieur ont toujours été des opérations difficiles a toujours été à réaliser, en raison notamment de la petitesse du diamètre des noyaux, des enroulements et de la faible rigidité présentée par ces derniers.

Certes, on a pu surmonter en partie ces difficultés en faisant appel à un procédé de fabrication d'un transducteur magnétique qui a été décrit dans la demande de brevet WO-A-85/02 479 et qui consiste d'abord à constituer des têtes magnétiques formées chacune d'un noyau magnétique filiforme pourvu d'un enroulement d'excitation, à enrober ensuite chaque tête à l'intérieur d'un petit bloc rigide de matériau isolant afin d'obtenir un sous-ensemble indéformable qui peut être plus facilement manipulé, et à fixer enfin ce sous-ensemble avec d'autres sous-ensembles identiques à l'intérieur d'un boîtier, ce qui permet d'obtenir un transducteur comportant plusieurs têtes. Afin que les enroulements de ces têtes puissent être aisément raccordés à un circuit électrique de commande disposé à l'extérieur de ce transducteur, le fil conducteur isolé qui est utilisé pour constituer chaque enroulement est très long et présente alors une portion de fil qui est bobinée sur le noyau de la tête correspondante, ainsi que deux portions de fil non bobinées qui, elles-mêmes, sont formées chacune d'une partie qui est emprisonnée à l'intérieur du bloc rigide et d'une partie libre qui, extérieure à ce bloc, est relativement longue et peut ainsi être ultérieurement reliée facilement à ce circuit de commande. Cependant, étant donné que le fil conducteur qui est utilisé pour ces enroulements est extrêmement fin, les parties libres des portions non bobinées des enroulements risquent, lors des opérations de montage des blocs rigides à l'intérieur du boîtier, d'être sérieusement endommagées, voire même d'être cassées, par suite, par exemple, d'un accrochage involontaire avec un corps étranger. C'est pourquoi, dans une variante de mise en oeuvre du procédé décrit dans la demande de brevet précitée, l'enroulement qui est formé sur chaque noyau magnétique est dépourvu de portions de fil conducteur non bobinées, c'est-à-dire qu'il est uniquement constitué d'une portion de fil conducteur bobinée sur le noyau. Dans ce cas, chaque noyau, après avoir été muni de son enroulement d'excitation, est enrobé dans une résine durcissable qui, une fois durcie, forme un bloc-support rigide. Mais, du fait que l'enroulement qui est bobiné sur ce noyau est totalement enrobé dans cette résine et ne comporte plus de portions non bobinées lui permettant d'être raccordé à un circuit de commande extérieur, ce bloc-support est soumis à un usinage qui lui donne la forme d'un parallélépipède dans lequel le noyau magnétique est orienté sensiblement suivant une diagonale de ce parallélépipède. Ce parallélépipède présente alors deux faces parallèles qui sont usinées de telle sorte qu'elles interceptent un certain nombre de spires situées aux deux extrémités de l'enroulement. Ces spires, qui se trouvent ainsi sectionnées, forment alors sur ces deux faces parallèles, des parties métalliques qui, étant à nu, peuvent ensuite être raccordées au circuit de commande extérieur. Cependant, cette manière de faire présente l'inconvénient, non seulement de sectionner un grand nombre de spires et de réduire ainsi les performances des têtes magnétiques, mais également de ne pas permettre d'ajuster avec précision le nombre de spires nécessaires à l'obtention d'un champ magnétique de valeur donnée. En effet,il arrive fréquemment, au cours de cette opération d'usinage, que certaines spires situées au voisinage de ces deux faces parallèles se trouvent involontairement mises à nu, si bien que ces spires se trouvent connectées électriquement aux spires volontairement sectionnées lorsque, ensuite, ces deux faces sont revêtues d'une couche métallique conductrice. Dans ces conditions, le nombre de spires non court-circuitées ne peut être connu avec précision et, par suite, il est très difficile de réaliser des têtes présentant toutes les mêmes caractéristiques magnétiques.

Afin de remédier à ces inconvénients, on peut utiliser un procédé de fabrication d'un transducteur magnétique qui a été décrit dans la demande de brevet japonais JP-A-5 680 815, ainsi que dans la revue du "Patent Abstracts of Japan, vol.5, N° 146 (P-80)(818)" du 16 septembre 1981, et qui consiste à réaliser un bloc-support, en matière amagnétique, présentant sur l'une de ses faces une série de p gorges destinées à recevoir chacune un noyau magnétique pourvu de son enroulement. Cet enroulement est constitué d'un conducteur filiforme, non isolé, qui est bobiné, en spires non jointives, sur un manchon cylindrique isolant. Lorsque tous les noyaux magnétiques ont été mis en place dans ces gorges, on superpose, sur le bloc-support, une plaque munie d'un circuit imprimé comportant des plages de contact. Ces plages de contact sont disposées de telle sorte que, lorsque cette plaque est positionnée sur le bloc-support, chacune de ces plages se trouve en contact avec les spires situées aux extrémités de chacun des enroulements. Du fait que la profondeur des gorges du bloc-support est inférieure au diamètre des noyaux magnétiques, chaque enroulement fait donc saillie sur la surface du bloc-support. Il en résulte que, lorsque la mise en place de la plaque est terminée, chacune des deux extrémites de chaque enroulement se trouve électriquement connectée à une plage de contact correspondante de cette plaque. Cependant, cette disposition exige un positionnement rigoureux de tous les enroulements, de manière à ce que leurs extrémités à connecter soient toutes situées dans un même plan. Il en résulte que la mise en place des noyaux et de leurs enroulements dans les gorges du bloc-support est une opération délicate, longue et coûteuse et que ce procédé ne peut être envisagé pour réaliser un transducteur magnétique comportant un très grand nombre de noyaux et d'enroulements.

La présente invention propose un procédé qui permet de réaliser un transducteur magnétique comportant plusieurs têtes à noyaux magnétiques filiformes, même dans le cas où ces noyaux ont un diamètre très faible, c'est-à-dire inférieur à 0,5 millimètre. Ce procédé se révèle d'autant plus intéressant qu'il permet de réaliser aisément un transducteur magnétique dans lequel les têtes présentent pratiquement toutes les mêmes caractéristiques magnétiques.

Plus précisément, la présente invention concerne un procédé pour fabriquer un transducteur magnétique adapté pour l'enregistrement et/ou la lecture d'informations sur un support magnétique, ce transducteur comportant au moins une rangée de p têtes magnétiques, chacune de ces têtes étant constituée d'un noyau magnétique allongé pourvu d'un, enroulement d'excitation. Ce procédé consistant :

- à former un enroulement de fil conducteur isolé sur chaque noyau magnétique allongé, cet enroulement s'étendant sur toute la longueur de ce noyau et présentant deux premiers groupes de spires situés respectivement au voisinage de chacune des extrémités de ce noyau, ainsi que deux seconds groupes de spires localisés respectivement à proximité de chacune de ces extrémités, entre cette extrémité et le premier groupe de spires qui est voisin de cette extrémité,
- à réaliser au moins un bloc élémentaire en disposant, sur une plaque-support présentant deux bords opposés, p noyaux pourvus chacun d'un enroulement, de manière que ces p noyaux s'étendent entre ces deux bords,
- et à enrober l'ensemble de ces p noyaux et de leurs enroulements dans une couche de substance isolante durcissable,

ce procédé étant caractérisé en ce qu'il consiste en outre :

- à attaquer sélectivement la surface de cette couche, après durcissement de cette substance, de manière à mettre à nu, sur chaque enroulement, lesdits premiers et seconds groupes de spires, cette attaque étant réalisée de telle sorte que ces spires ainsi mises à nu ne subissent, au plus, qu'une réduction partielle de leur section,
- à déposer sélectivement, sur ladite surface et sur les groupes de spires qui ont été mis à nu, une couche conductrice de façon à former des plages de contact qui servent à raccorder ces premiers groupes de spires à un circuit électrique de commande.
- et à éliminer ensuite, sur chaque enroulement, lesdits seconds groupes de spires.

Grâce à cette élimination, les enroulements qui sont bobinés sur les différents noyaux ne risquent pas de venir au contact de la surface du support d'enregistrement magnétique lorsque les extrémités de ces noyaux sont appliquées sur cette surface conductrice, ce qui évite que, lois de l'enregistrement des informations sur ce support, certains enroulements ne se trouvent involontairement excités par des courants électriques parasites circulant dans ce support. Cette élimination évite également que, par suite d'opérations d'usinage pratiquées - comme on le verra plus loin- sur les parties terminales des noyaux magnétiques, chacune des deux extrémités de chaque enroulement bobiné sur chaque noyau se trouve mise électriquement en contact avec la matière conductrice constitutive de ce noyau, ce qui aurait pour effet de mettre en court-circuit l'enroulement bobiné sur ce noyau.

L'invention concerne également un transducteur magnétique réalisé selon ce procédé.

L'invention sera mieux comprise et d'autres buts et avantages de celle-ci apparaîtront mieux dans la description suivante, donnée à titre d'exemple non limitatif, et en se référant aux dessins annexés sur lesquels :

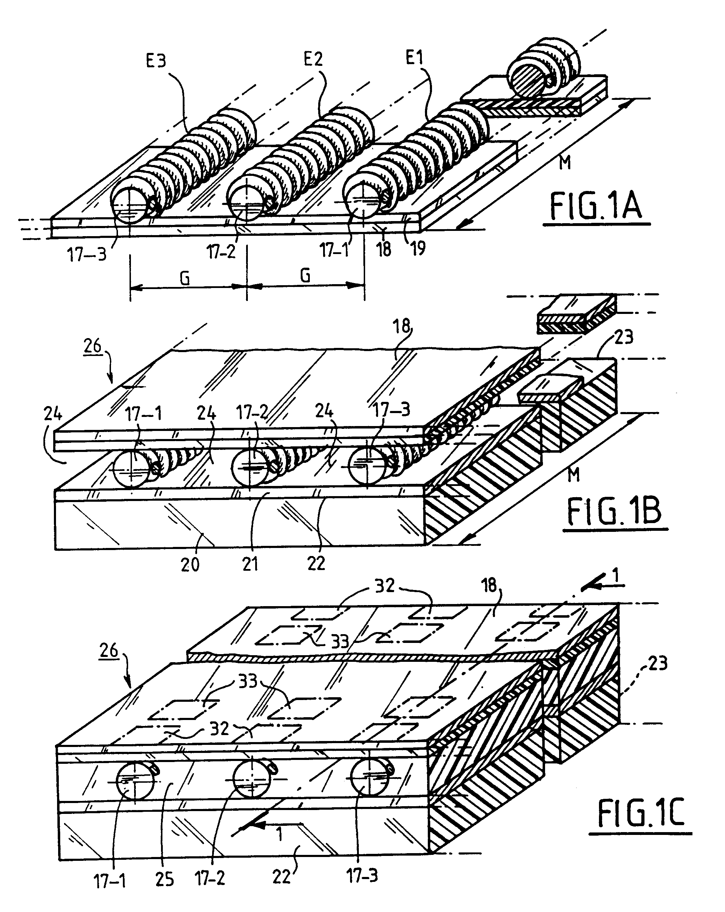

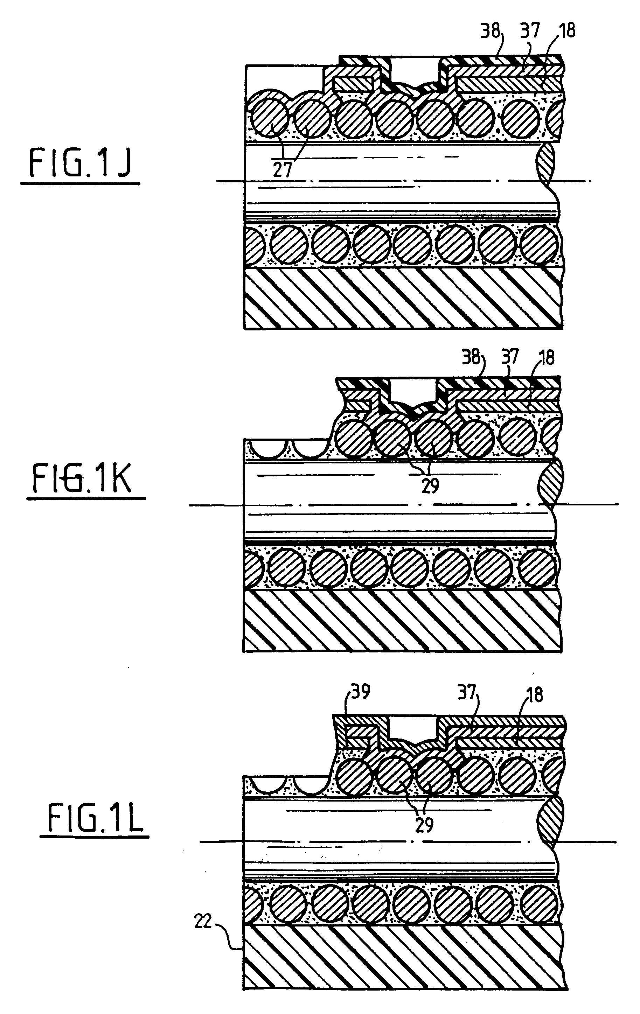

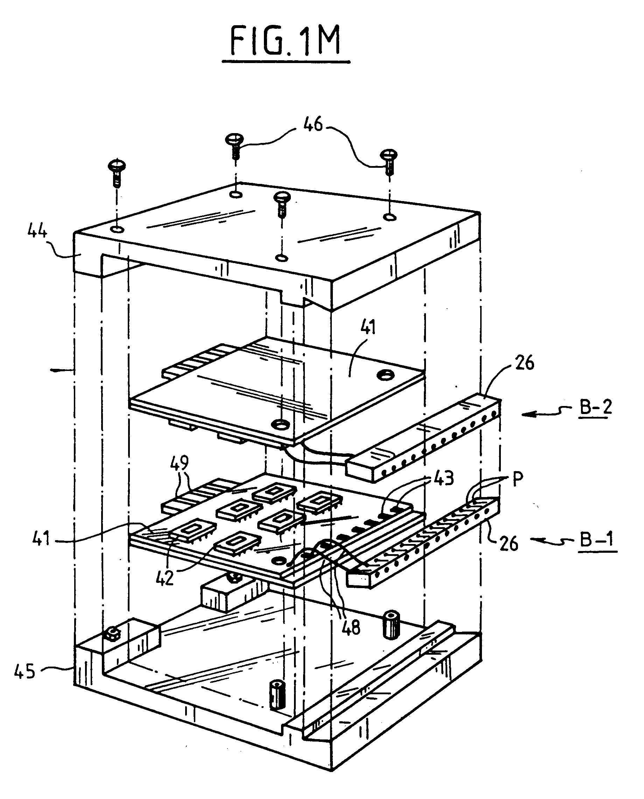

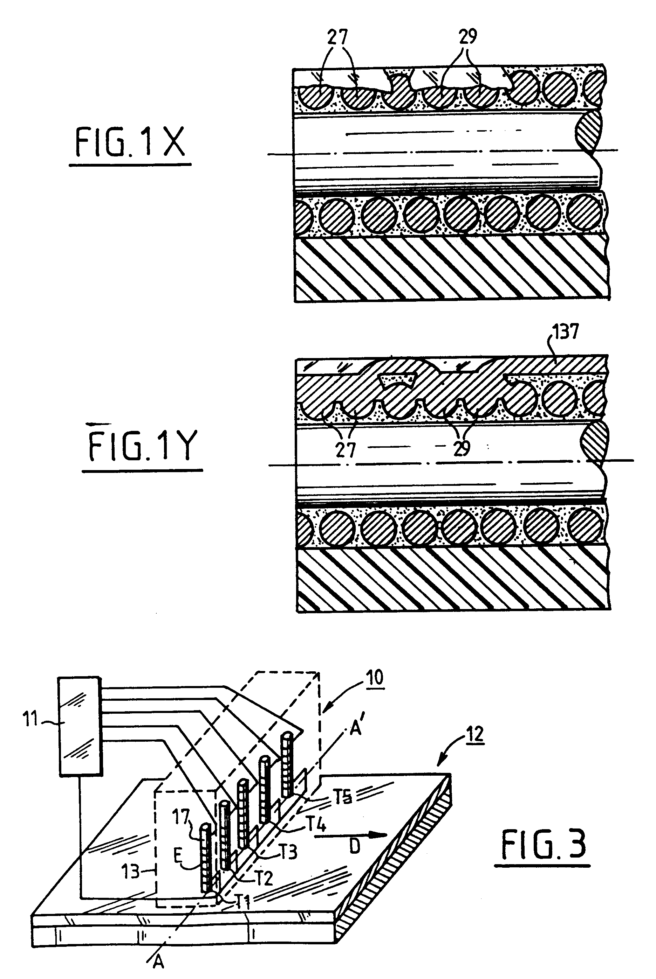

. Les figures 1A et 1M illustrent les différentes phases d'un premier mode de mise en oeuvre du procédé de fabrication qui permet, selon l'invention, d'obtenir un transducteur magnétique,

. Les figures 1X et 1Y montrent des variantes d'exécution de certaines phases du procédé illustré par les figures 1A à 1M,

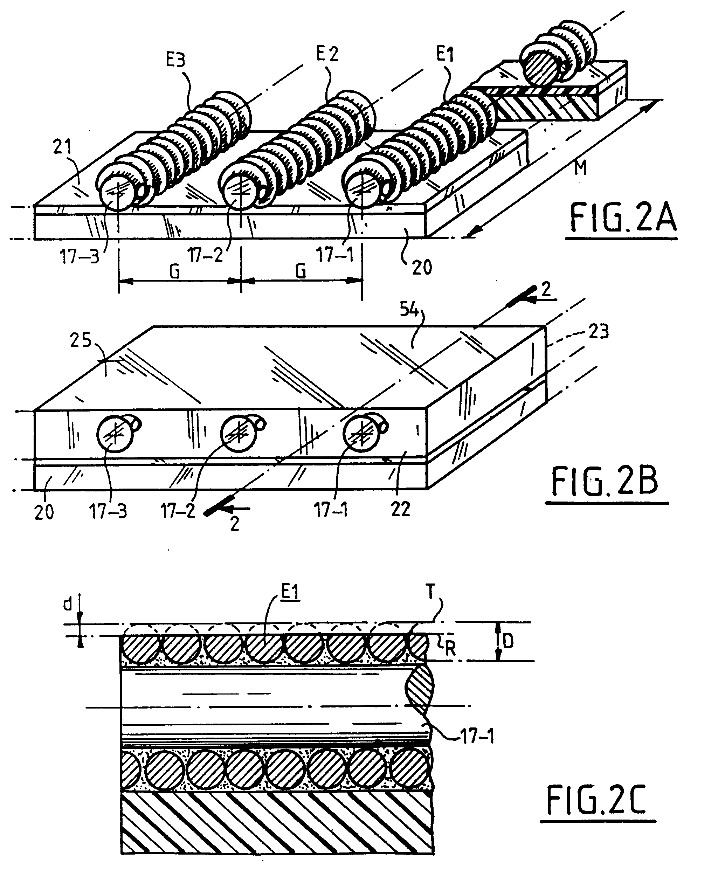

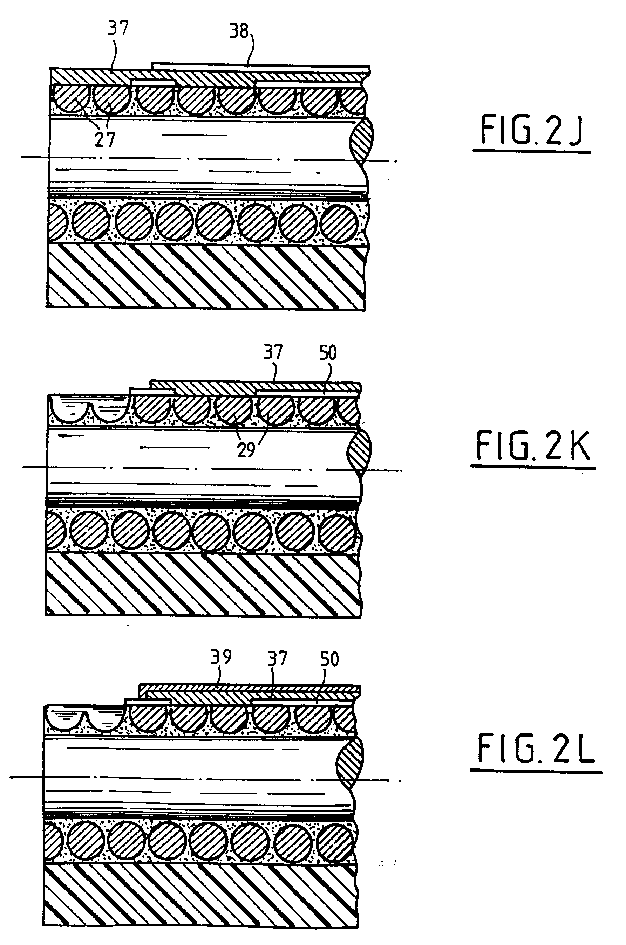

. Les figures 2A à 2L illustrent les différentes phases d'un second mode de mise en oeuvre du procédé de fabrication qui permet, selon l'invention, d'obtenir un transducteur magnétique,

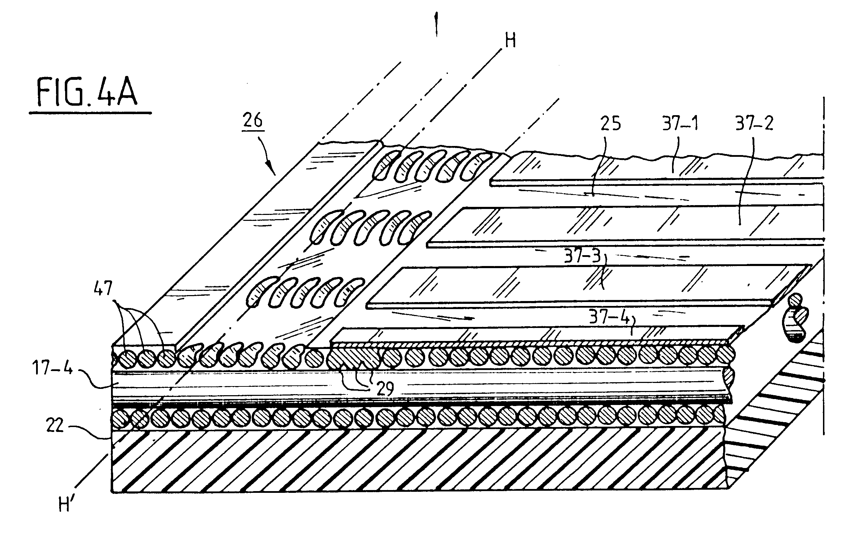

. La figure 3 est une vue schématique montrant la disposition respective des têtes magnétiques qui équipent un transducteur magnétique capable d'être fabriqué selon le procédé de l'invention,

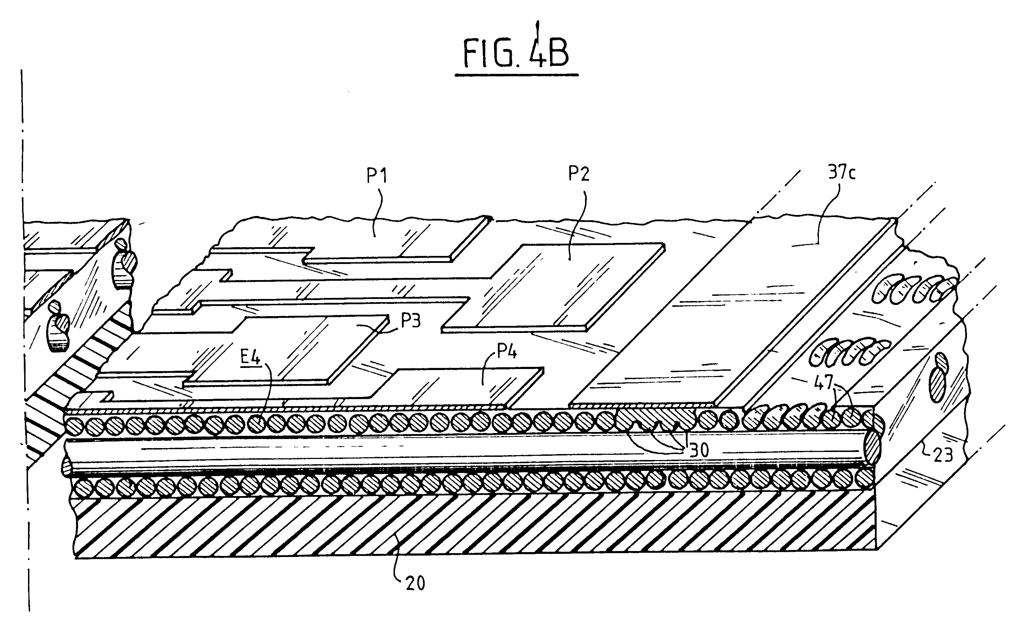

. Les figures 4A et 4B représentent, lorsqu'elles sont assemblées, une vue de détail montrant une première disposition des barrettes conductrices servant à l'excitation des enroulements du transducteur,

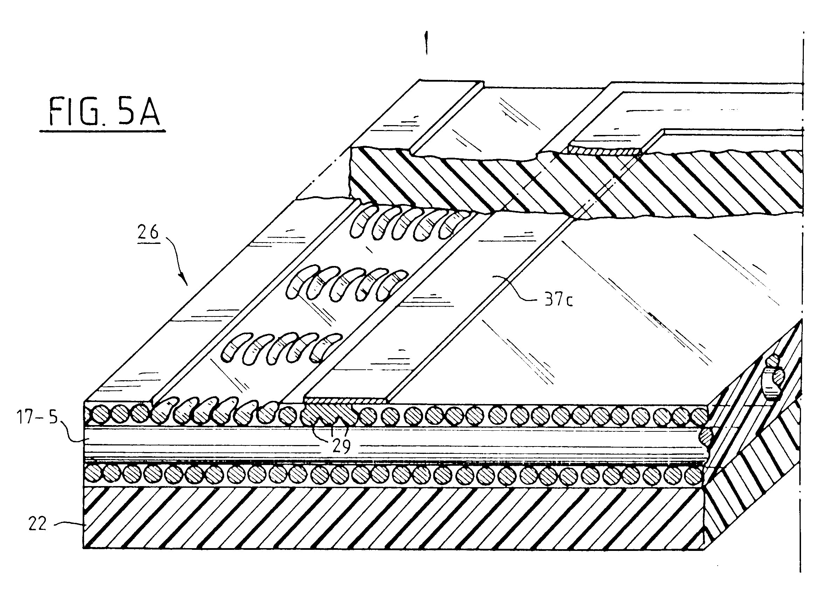

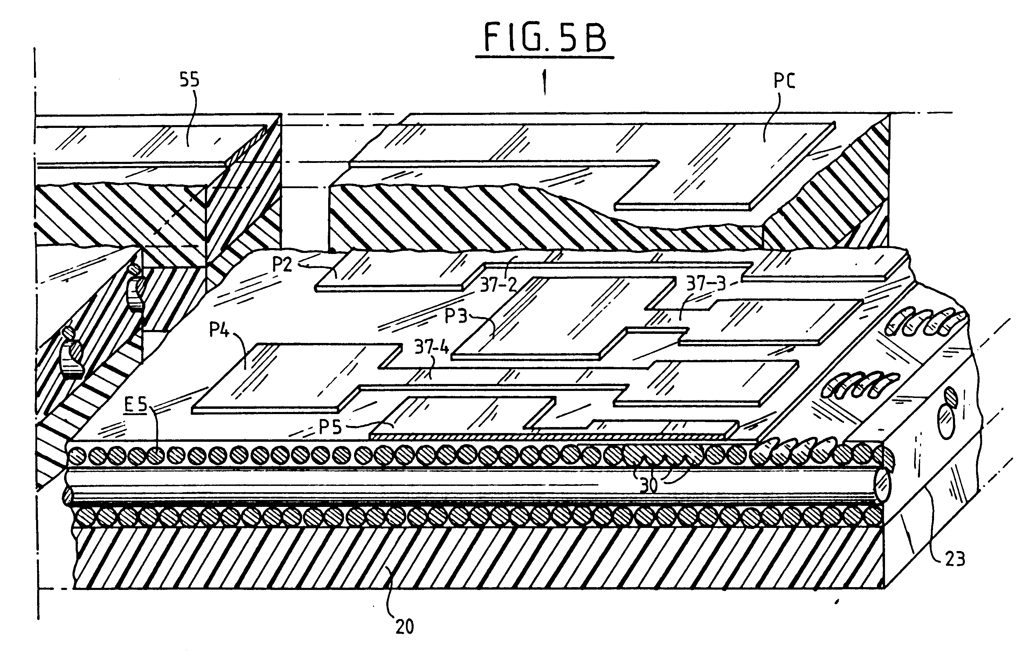

. Les figures 5A et 5B représentent, lorsqu'elles sont assemblées, une vue de détail montrant une seconde disposition des barrettes conductrices servant à l'excitation des enroulements du transducteur,

La figure 6 est une vue en perspective destinée à montrer, d'une manière plus détaillée, l'une des phases opératoires entreprises lors de la mise en oeuvre du procédé illustré par les figures 1A à 1M, et,

La figure 7 montre une variante de réalisation du premier mode de mise en oeuvre du procédé illustré par les figures 1A à 1M.

Sur la figure 3, on a représenté, de manière très schématique, un transducteur magnétique 10 qui, recevant des signaux électriques représentatifs de données envoyés par une unité de commande 11, réalise l'enregistrement de ces données, sous forme de zones magnétisées, sur un support d'enregistrement magnétique 12. Il faut cependant signaler que, bien que ce transducteur soit utilisé ici pour l'enregistrement de signaux, ce même transducteur pourrait également servir à détecter la présence de zones magnétisées enregistrées sur un support d'enregistrement magnétique, afin de les convertir en signaux électriques. Un tel transducteur, qui permet l'enregistrement ou la lecture d'informations sur un support magnétique, comporte habituellement une pluralité de têtes magnétiques T1, T2, T3, etc ... qui, comme le montre la figure 3, sont montées à l'intérieur d'un bloc-support 13, l'ensemble constitué par ces têtes magnétiques et ce bloc-support étant ordinairement désigné sous le nom de module. Ces têtes, qui sont du type de celles qui ont été accessoirement décrites dans la demande de brevet français publiée sous le nº 2.228.253 et dans le brevet des Etats-Unis d'Amérique nº 3.301.948, comprennent chacune un noyau magnétique 17, en forme d'aiguille, constitué d'un matériau magnétique doux, tel que l'alliage fer-silicium contenant environ 4% de silicium par exemple, ce noyau étant entouré d'un enroulement E qui peut être sélectivement excité par les signaux électriques délivrés par l'unité de commande 11. Ainsi qu'on peut le voir sur la figure 3, les noyaux des différentes têtes T1, T2, T3, etc ..., sont placés les uns à côté des autres, perpendiculairement à la surface du support d'enregistrement 12, et leurs extrémités inférieures sont alignées suivant une direction AA' qui, parallèle à la surface du support 12, forme un angle non nul avec la direction de déplacement D de ce support. Dans l'exemple de réalisation illustré par la figure 3, cette direction AA' est perpendiculaire à la direction de déplacement D.

Bien que, pour des raisons de simplification, on n'ait représenté que cinq têtes magnétiques T1 à T5 sur la figure 3, on comprendra que le nombre de têtes magnétiques du transducteur 10 peut être différent de celui qui figure sur les dessins. On considérera que, dans l'exemple préféré de réalisation qui sera décrit plus loin, le transducteur comporte au moins une rangée de cent soixante huit noyaux magnétiques alignés suivant une même direction AA', chaque noyau ayant un diamètre pratiquement égal à soixante-dix microns, ces noyaux ayant un espacement de centre à centre sensiblement égal à deux cent douze microns. Dans ces conditions, on peut, en excitant pendant un bref instant les enroulements bobinés sur ces noyaux, obtenir sur le support d'enregistrement 12 des zones magnétisées pratiquement ponctuelles qui, dans une direction parallèle à la direction AA', sont réparties à un pas de 0, 212 mm. Il est cependant possible, comme on le verra plus loin, d'obtenir sur le support d'enregistrement 12 des zones magnétisées ponctuelles réparties à un pas plus faible, en prévoyant dans le transducteur 10, en plus de la rangée de têtes magnétiques alignées suivant la direction AA', au moins une autre rangée de têtes magnétiques alignées suivant une direction parallèle à la direction AA', mais décalées d'une fraction de pas par rapport aux têtes magnétiques de la première rangée.

Dans la forme de réalisation illustrée par la figure 3, les circuits 11 qui commandent l'excitation des enroulements des différentes têtes T1, T2, etc ... sont tous logés à l'extérieur du module 10. Il faut cependant signaler que cette forme de réalisation n'est pas exclusive de la présente invention et que, comme on le verra d'ailleurs plus loin, une partie de ces circuits pourra prendre place à l'intérieur du module.

On va maintenant décrire, en se référant aux figures 1A à 1M, les phases successives d'un premier mode d'exécution du procédé de l'invention qui permet d'obtenir un transducteur magnétique du type de celui qui a été schématiquement représenté sur la figure 3. Ce procédé nécessite pour sa mise en oeuvre un nombre p de noyaux magnétiques filiformes, ce nombre p étant égal, dans l'exemple décrit, à cent soixante-huit, chacun de ces noyaux étant constitué d'un matériau magnétique doux et étant pourvu d'un enroulement d'excitation. Sur la figure 1A, trois seulement de ces noyaux, désignés par les références 17-1, 17-2, 17-3, ont été représentés, les enroulements portés par ces noyaux étant désignés respectivement, sur cette figure, par les références E1, E2 et E3. Le matériau magnétique doux qui, dans l'exemple décrit, a été préférentiellement choisi pour constituer chacun de ces noyaux est un alliage fer-nickel qui est fabriqué industriellement par la Société Métallurgique d'Imphy sous le nom de "Anhyster DS", cet alliage contenant 50 % de nickel et 50 % de fer. Il faut néanmoins signaler que ce matériau n'est pas exclusif de l'invention et que chaque noyau magnétique 17 pourrait être réalisé en tout autre matériau magnétique doux. Dans un mode d'obtention plus particulièrement avantageux, les noyaux magnétiques pourvus de leurs enroulements sont issus du sectionnement d'un même fil de matériau magnétique, très long, autour duquel a été préalablement enroulé un fil conducteur isolé, cet enroulement étant effectué de façon continue, au moyen d'une machine bobineuse de type connu. Le fil conducteur qui est utilisé, dans l'exemple décrit, pour constituer cet enroulement est un fil de cuivre isolé dont le diamètre est égal à quarante microns. On considérera, dans l'exemple décrit, que cet enrouleemnt est réalisé à spires jointives, en une seule couche, sur un fil de matériau magnétique dont le diamètre est égal à soixante-dix microns.

On considèrera en outre que le fil de matériau magnétique, autour duquel a été enroulé le fil conducteur isolé, est suffisamment long pour permettre d'obtenir, lorsqu'il est sectionné, p portions de fil ayant toutes la même longueur M, chacune de ces p portions constituant un noyau magnétique muni de son enroulement d'excitation, ce dernier s'étendant ainsi sur toute la longueur de ce noyau. Les noyaux magnétiques 17-1, 17-2, ... 17-p et leurs enroulements respectifs E1, E2, ... Ep, qui sont obtenus de cette manière sont fixés, comme le montre la figure 1A, les uns à côté des autres, sur une feuille métallique 18 dont la surface a été préalablement revêtue d'une couche 19 de matière isolante adhésive. On considèrera que, dans l'exemple décrit, cette feuille métallique 18, qui est de forme rectangulaire, est constituée d'un mince feuillard de cuivre ayant une épaisseur de l'ordre d'une vingtaine de microns et une largeur M voisine de cinq millimètres. Ainsi qu'on peut le voir sur la figure 1A, les noyaux 17-1, 17-2, ... 17-p sont disposés, parallèlement à la largeur M de cette feuille 18, à intervalles réguliers, le pas G d'espacement des noyaux étant égal, dans l'exemple décrit à 212 $\mu$ m. On considérera en outre que, dans l'exemple décrit, la feuille 18 a une longueur voisine de 35,5 millimètres, de sorte que le nombre maximum de noyaux qui peuvent ainsi prendre place sur cette feuille est égal à cent soixante-huit. La fixation de ces noyaux sur cette feuille est assurée par la couche 19 de matière isolante adhésive, cette dernière étant constituée, dans l'exemple décrit, par une résine polymérisable dont la polymérisation n'est entreprise que lorsque ces noyaux magnétiques ont été mis en place sur la feuille 18.

D'après les valeurs numériques indiquées plus haut, on pourra remarquer que les différents éléments constitutifs des ensembles représentés sur les figures annexées n'ont pas tous été dessinés à l'échelle et que les dimensions de certains d'entre eux ont été volontairement exagérées dans un but évident de clarté des dessins.

L'ensemble que l'on obtient lorsque la fixation des noyaux magnétiques sur la feuille 18 est terminée, est alors renversé et placé, comme le montre la figure 1B, sur une plaque-support 20 dont la surface a été préalablement revêtue d'une couche 21 de matière isolante adhésive. A l'exception de son épaisseur, cette plaque-support 20, de forme parallélépipédique, possède les mêmes dimensions que la feuille métallique 18. Ainsi qu'on peut le comprendre en observant la figure 1B, la mise en place, sur la plaque-support 20, de l'ensemble constitué par la feuille 18 et les noyaux magnétiques collés sur cette feuille, est réalisée en amenant d'abord cet ensemble en superposition, au-dessus de la plaque-support 20, de manière que ces noyaux magnétiques soient orientés perpendiculairement aux bords de grande dimension, 22 et 23, de cette plaque, et en appliquant ensuite cet ensemble sur cette plaque afin d'amener ces noyaux en contact avec la couche 21 de matière isolante adhésive. La fixation de ces noyaux sur la plaque-support 20 est assurée, dans ces conditions, par cette couche 21, cette dernière étant en effet constituée, dans l'exemple décrit, par une résine polymérisable dont la polymérisation n'est entreprise que lorsque l'ensemble formé par la feuille 18 et les noyaux magnétiques a été mis en place sur la plaque-support 20. Lorsque cette fixation est terminée, on obtient un bloc 26, de forme parallélépipédique, qui est représenté sur la figure 1B, mais dans lequel subsistent des espaces vides 24. Ces espaces sont alors comblés au moyen d'une résine de moulage qui est introduite dans ces espaces en faisant appel à une technique connue d'imprégnation sous vide. On considérera que la résine de moulage qui est utilisée, dans l'exemple décrit, pour effectuer ce remplissage est une résine époxy fabriquée industriellement par la Société CIBA-GEIGY. Il faut toutefois signaler que ce type de résine de moulage n'est pas spécifique de la présente invention et que l'on pourra utiliser, pour réaliser ce remplissage, tout autre type de résine approprié tel que, par exemple, une résine acétal. Le bloc que l'on obtient lorsque cette résine a été durcie est représenté sur la figure 1C. Les noyaux magnétiques 17-1, 17-2, ... 17-p qui, à l'intérieur de ce bloc sont intercalés entre la feuille 18 et la plaque-support 20 se trouvent alors enrobés dans une couche 25 de résine isolante, de même que les enroulements E1, E2, ..., Ep qui sont bobinés sur ces noyaux. En conséquence, seules les extrémités de ces noyaux apparaissent sur les faces opposées 22 et 23 du bloc 26, ces faces coïncidant en effet avec les bords de grande dimension de la plaque-support 20.

Il faut maintenant signaler que les couches 19 et 21 de matière isolante adhésive s'apparentent, de par le rôle physique qu'elles jouent dans la structure du bloc 26, à la couche 25 de résine isolante. Ces couches 19 et 21 peuvent d'ailleurs être formées de la même résine que celle constituant la couche 25. C'est pourquoi, dans la suite du texte, ces trois couches ne seront pas distinguées les unes des autres et que l'ensemble de ces trois couches sera purement assimilé à une seule couche qui, désormais, sera désigné sous l'appellation de couche 25 de résine.

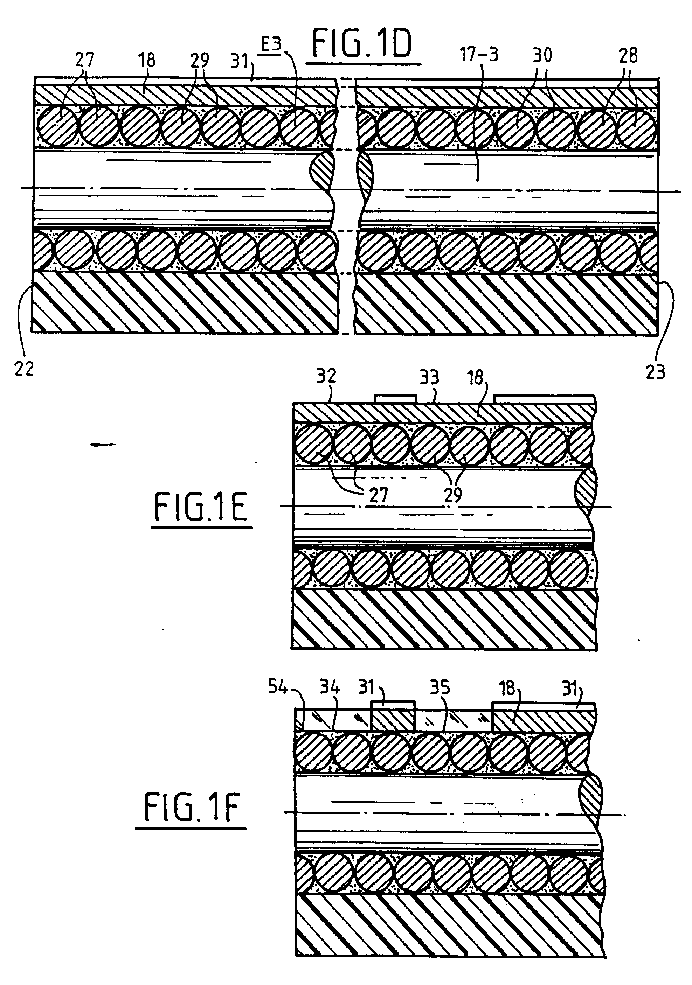

On va maintenant décrire les opérations qui, dans le procédé de l'invention, vont permettre à ces enroulements E1, E2, ... Ep, devenus ainsi inaccessibles, d'être raccordés à un circuit électrique de commande. Afin de bien faire comprendre le détail de ces opérations, on fera référence aux figures 1D à 1L qui illustrent les différentes phases opératoires réalisées, les phases montrées par ces figures n'étant rapportées, pour des raisons évidentes de simplification, qu'à l'un seulement des noyaux magnétiques et à l'enroulement porté par ce noyau. La figure 1D représente une vue en coupe partielle d'une fraction du bloc 26, suivant un plan perpendiculaire à la surface de la feuille 18 et passant par une ligne indiquée par 1-1 sur la figure 1C. Sur cette figure 1D, on voit le noyau magnétique 17-3 dont les extrémités se trouvent à l'aplomb des faces 22 et 23 du bloc 26, ainsi que l'enroulement E3 qui est bobiné sur ce noyau. Cet enroulement E3 comporte une pluralité de spires dont certaines, telles que celles désignées par les références 27 et 28, sont situées à proximité des extrémités du noyau magnétique 17-3, les spires 27 constituant ainsi un groupe de spires situé à proximité de la face 22 du bloc 26, et les spires 28 constituant un autre groupe de spires situé à proximité de la face 23 de ce bloc. Dans l'exemple illustré sur la figure 1D, chacun de ces groupes ne comporte que deux spires, mais on comprendra que, dans la réalité, pour des raisons qui apparaîtront plus loin, le nombre de spires constitutives d'un même groupe pourra être plus élevé et être choisi égal à un nombre fixe prédéterminé, par exemple à six. Ces deux groupes 27 et 28 de spires seront, dans la suite du texte, désignés sous le nom de seconds groupes de spires. A côté du groupe 27 de spires, on trouve un groupe 29 de spires, ce groupe 29 pouvant être ou non contigu au groupe 27 de spires.

De même, à côté du groupe 28 de spires, on trouve un groupe 30 de spires, ce groupe 30 pouvant être ou non contigu au groupe 28 de spires. Dans l'exemple illustré sur la figure 1D, chacun des groupes 29 et 30 ne comporte que deux spires, mais on comprendra que, dans la réalité, pour des raisons qui apparaîtront plus loin, le nombre de spires de chacun de ces groupes 29 et 30 pourra être plus élevé. Ces deux groupes 29 et 30 de spires seront, dans la suite du texte, désignés sous le nom de premiers groupes de spires.

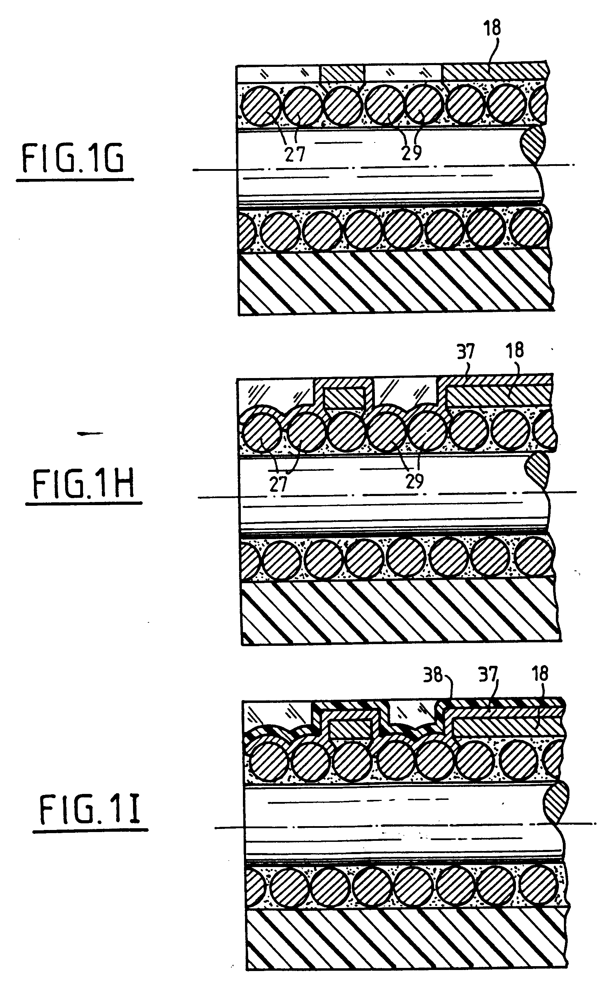

Afin de permettre aux enroulements E1, E2, ..., Ep d'être raccordés à un circuit électrique de commande, on dépose d'abord sur la surface de la feuille 18, comme l'indique la figure 1D, une pellicule 31 de laque photosensible. Après précuisson et insolation au travers d'un masque, cette pellicule de laque est développée, le masque et le type de laque utilisés étant établis de manière à ce que, à la fin de ces opérations, la pellicule de laque se trouve éliminée, comme on le voit sur la figure 1E, des régions 32 et 33 de la surface de la feuille 18 qui sont situées en regard, respectivement, des seconds et des premiers groupes de spires de chaque enroulement. Afin de mieux préciser leur localisation, ces régions 32 et 33 ont été représentées, sur la figure 1C en perspective, sous la forme de petits rectangles tracés en traits mixtes. Les régions 32 et 33 qui ont été ainsi mises à nu, sont alors soumises à une gravure chimique, ce qui a pour effet, comme on peut le voir sur la figure 1F, d'éliminer de ces régions le matériau constitutif de la feuille 18 et de découvrir ainsi une partie de la surface 54 de la couche 25 de résine qui était jusque-là recouverte par cette feuille, cette partie de surface découverte étant formée des portions de surface 34 et 35 qui étaient situées sous les régions 32 et 33. Dans l'exemple décrit où la feuille métallique 18 est en cuivre, cette opération de gravure est réalisée à l'aide d'une solution de perchlorure de fer, bien connue, pendant un temps qui, compte-tenu de l'épaisseur de cette feuille, est de l'ordre d'une trentaine de secondes. Après quoi, le bloc 26 est rincé à l'eau, puis, après séchage, est placé dans un appareillage de gravure par plasma d'oxygène où sa face sur laquelle apparaissent les portions de surface 34 et 35 est soumise à une opération de gravure ionique réactive. Cette opération, qui est réalisée, pendant une vingtaine de minutes, dans une enceinte contenant, sous une pression réduite à quelques dizaines de millitorr, un gaz composé d'environ 90 % en volume d'oxygène et, pour le reste, d'hexafluorure de soufre ou de fréon, a pour effet, comme on peut le voir sur la figure 1G, d'éliminer toutes les matières isolantes organiques, qui, sur la face attaquée du bloc 26, n'ont pas été revêtues de matière métallique. C'est ainsi que, au cours de cette attaque, non seulement les portions subsistantes de la pellicule 31 de la laque photosensible se trouvent entièrement retirées, de même que les parties de la couche de résine 25 qui ont été mises à nu à la suite de la gravure de la feuille métallique 18, mais également l'émail isolant recouvrant les parties à nu des seconds et des premiers groupes de spires 27, 28, 29 et 30 se trouve totalement enlevé, de sorte que la partie métallique de ces spires est maintenant à nu. Lorsque l'opération de gravure ionique réactive est terminée, les spires qui ont été mises à nu et la feuille métallique 18 subissent un nettoyage par trempage dans une solution de persulfate d'ammonium, puis sont soumises à un nettoyage ionique par bombardement d'argon.

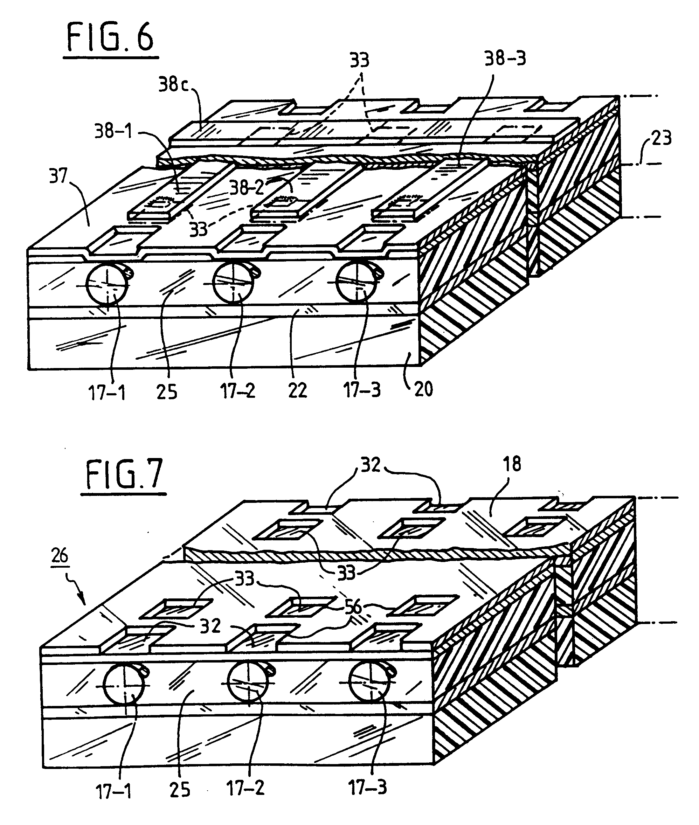

Après quoi, on dépose sur ces spires et sur la feuille métallique 18, comme le montre la figure 1H, une couche 37 de métal conducteur. Cette couche est constituée par du cuivre et elle est déposée, préférentiellement, soit par voie chimique, soit en utilisant le procédé bien connu de pulvérisation cathodique. Bien que l'épaisseur de cette couche 37 soit très faible, c'est-à-dire, voisine d'une dizaine de microns, on comprend alors que toutes les spires constituant les premiers et les seconds groupes de spires sont toutes connectées entre elles et à la feuille 18 par l'intermédiaire de cette couche électriquement conductrice 37. Lorsque cette opération est terminée, on dépose alors sur cette couche 37, comme l'indique la figure 1I, une pellicule 38 de laque photosensible, le rôle de cette pellicule étant de permettre à la couche métallique 37 et à la feuille métallique 18 d'être gravées simultanément, suivant une configuration déterminée, afin que les parties de cette couche et de cette feuille qui subsistent après cette gravure forment, sur la face du bloc 26 sur laquelle se trouvait cette feuille, une série de plages de contact et de barrettes conductrices destinées, ainsi qu'on le verra plus loin, à assurer les liaisons électriques nécessaires à l'excitation des différents enroulements. Après précuisson et insolation au travers d'un masque, cette pellicule de laque est développée, le masque et le type de laque utilisés étant établis de manière à ce que, à la fin de ces opérations, la pellicule de laque 38 se trouve partiellement éliminée de la surface de la couche métallique 37, comme le montre la figure 1J, et que les portions non éliminées de cette laque forment sur la surface de cette couche 37, comme on peut le voir sur la figure 6, d'une part une bandelette de laque 38C qui, s'étendant parallèlement au bord 23 de la plaque-support 20, passe à l'aplomb des régions 33 dont on a parlé plus haut, ces régions étant ici celles qui sont les plus proches de ce bord 23, d'autre part p bandelettes de laque 38-1, 38-2, ..., 38-p, en nombre égal à celui des noyaux magnétiques 17-1, 17-2, ..., 17-p, ces p bandelettes recouvrant les parties de la couche 37 situées à l'aplomb des régions 33 les plus proches de l'autre bord 22 de la plaque-support 20, chacune de ces dernières bandelettes s'étendant dans une direction perpendiculaire à la direction d'allongement de la bandelette 38C. Ces bandelettes de laque présentent une configuration qui sera précisée un peu plus loin et qui est établie de façon à permettre d'obtenir, par gravure de la couche métallique 37, d'une part des plages de contact suffisamment larges pour que les opérations de raccordement des enroulements à un circuit électrique de commande puissent être réalisées facilement, d'autre part des barrettes conductrices assurant les liaisons nécessaires entre ces plages de contact et les premiers groupes de spires qui sont situés au voisinage des extrémités de ces enroulements.

Lorsque l'opération qui vient d'être décrite est terminée, la face du bloc 26 qui a été revêtue de la couche métallique 37 est soumise à une opération de gravure réalisée au moyen d'une solution de perchlorure de fer. Cette opération, qui est effectuée pendant un temps de l'ordre de quelques dizaines de secondes, a pour effet d'éliminer, comme on peut le voir sur la figure 1K, toutes les parties de la couche métallique 37 qui ne sont pas protégées par la laque photosensible 38, ainsi que les parties de la feuille métallique 18 qui se trouvent sous les parties attaquées de la couche 37. Au cours de cette même opération, lorsque les parties de la couche métallique 37 qui recouvrent les régions 32 ont été éliminées, les seconds groupes de spires 27 et 28 qui sont situées sous ces régions 32 sont attaqués à leur tour, de sorte que, lorsque cette opération de gravure est terminée, ces seconds groupes de spires se trouvent pratiquement éliminés, ou du moins réduits à l'état de fragments métalliques isolés électriquement les uns des autres et des autres spires, restées intactes, des enroulements dont ces groupes de spires faisaient initialement partie. Dans ces conditions, lorsque, ensuite, on retire les bandelettes de laque 38C, 38-1, 38-2, ..., 38-p, on obtient, comme on le voit sur les figures 4A et 4B assemblées, un bloc 26 pourvu, sur sa face ayant subi l'opération de gravure, de barrettes conductrices 37C, 37-1, 37-2, ..., 37-p et de p plages de contact P-1, P-2, P-3, etc ..., ces barrettes conductrices et ces plages de contact résultant ainsi de la gravure de la couche métallique 37, le masque utilisé pour cette opération étant établi, ainsi qu'on l'a signalé plus haut, de manière à ce que, après gravure, les portions subsistantes de cette couche présentent la configuration représentée sur les figure 4A et 4B.

Dans la configuration représentée sur les figures 4A et 4B, les premiers groupes de spires 30 des enroulements E1, E2, ..., Ep sont tous reliés entre eux par l'intermédiaire de la barrette conductrice 37C, tandis que les p plages de contact P-1, P-2, P-3, etc .., qui sont en nombre égal à celui des enroulements E1, E2, ..., E-p, ..., sont reliées chacune respectivement, par l'intermédiaire de l'une des p barrettes conductrices correspondantes, aux premiers groupes de spires 29 de chacun de ces p enroulements. Ainsi qu'on le verra plus loin, la barrette conductrice 37C et les p plages de contact P-1, P-2, P-3, etc ... sont destinées à être raccordées à un circuit de commande prévu pour la commande sélective de l'excitation des différentes têtes. Cependant, avant d'effectuer cette connexion, on réalise, comme le montre la figure 1L, sur les plages de contact et sur les barrettes conductrices 37C, 37-1, 37-2, etc, ..., le dépôt d'une pellicule métallique 39, le rôle de cette pellicule étant de faciliter les opérations de soudure entreprises ultérieurement pour assurer cette connexion, tout en protégeant ces plages et ces barrettes contre l'action corrosive exercée par l'oxygène, l'humidité et les divers acides contenus dans l'atmosphère. Dans l'exemple décrit, cette pellicule est en réalité double et est constituée d'une pellicule de nickel, de quelques microns d'épaisseur, revêtue d'une très fine pellicule d'or ayant moins d'un micron d'épaisseur, ces deux pellicules étant déposées par voie électrolytique.

Le bloc 26 est alors soumis, au moins sur sa face 22, à une rectification destinée à donner à cette face un état de surface tel que cette face puisse venir, comme on le verra plus loin, au contact de la surface d'un support d'enregistrement magnétique sans risquer de provoquer une détérioration de cette surface lorsque celle-ci est entraînée en déplacement. Il peut arriver, par ailleurs, que, comme on peut le voir sur les figures 4A et 4B, les spires qui, faisant partie des seconds groupes de spires, ont été éliminées, soient situées à une distance très petite, mais non nulle, des faces 22 et 23. Dans ce cas, après élimination, de ces spires, il subsiste encore, dans les intervalles compris entre ces faces et les spires éliminées qui étaient voisines de ces faces, des spires qui, telles que celles désignées par les références 47 sur les figures 4A et 4B, sont restées intactes. Ces spires 47, qui ne jouent aucun rôle dans le fonctionnement des têtes, pourront être aisément éliminées par sciage du bloc 26 suivant deux plans parallèles aux faces 22 et 23, ces deux plans passant chacun respectivement par les deux régions du bloc 26 où étaient localisées les spires, qui, appartenant aux seconds groupes de spires, ont été éliminées. Sur la figure 4A, la trace de l'un de ces deux plans a été symboliquement représentée par une ligne en traits mixtes HH'. Les nouvelles faces du bloc 26 résultant de ce sciage sont alors soumises à l'opération de rectification indiquée plus haut.

Après toutes ces opérations, on obtient alors, comme on le voit sur les figures 4A et 4B assemblées, un bloc 26 dans lequel les différents enroulements bobinés sur les noyaux magnétiques sont constitués chacun des spires restées intactes qui sont comprises entre les deux premiers groupes de spires 29 et 30 de chaque enroulement et dans lequel, grâce à l'élimination des seconds groupes de spires, chaque noyau magnétique présente, à ses extrémités, deux portions de sa longueur qui sont totalement dépourvues de spires. Etant donné que la face rectifiée 22 du bloc est destinée à être amenée au contact de la surface d'un support d'enregistrement magnétique, cette disposition évite que les enroulements bobinés sur ces noyaux ne se trouvent en contact de cette surface et ne soient donc détériorés par celle-ci lorsque cette dernière est entraînée en déplacement. Cette disposition évite en outre que, lors de l'enregistrement des informations sur le support d'enregistrement magnétique, certains enroulements ne se trouvent involontairement excités par des courants électriques parasites circulant dans ce support. Afin que, par suite d'une diminution de la longueur des noyaux consécutive à une usure et à une utilisation prolongée du transducteur, ce risque de détérioration ne se produise pas, il est préférable que le nombre de spires faisant partie de chaque second groupe de spires ne soit pas trop petit. C'est ainsi que, dans l'exemple décrit, ce nombre est au moins égal à quatre. Par ailleurs, étant donné que l'excitation électrique de chaque enroulement bobiné, par exemple de l'enroulement Ei, est réalisé en faisant circuler un courant électrique dans la portion de circuit constituée par la plage de contact P-i, la barrette conductrice 37-i, l'enroulement Ei et la barrette conductrice 37-C, il est important que le nombre de spires constitutif de chacun des premiers groupes de spires 29 et 30 soit suffisamment élevé pour que la résistance électrique des connexions assurées par ces groupes de spires ne limite l'intensité des courants circulant dans chaque portion de circuit à une valeur inférieure à celle qui est nécessaire à un fonctionnement correct des têtes. Dans l'exemple décrit où les spires ont un diamètre de quarante microns et sont bobinées sur un noyau magnétique ayant un diamètre de soixante-dix microns, on a trouvé que le nombre de spires constitutif de chacun des premiers groupes de spires devait être au moins égal à deux.

Le bloc 26 que l'on obtient lorsque les opérations décrites ci-dessus sont terminées, est alors juxtaposé, comme le montre la figure 1M, à une carte de connexion 41, appelée habituellement substrat, cette carte étant pourvue d'un ensemble logique de commande constitué de composants électroniques 42. Cet ensemble logique de commande fait partie de l'unité de commande 11 dont on a parlé plus haut. La carte de connexion 41 est formée d'une plaque rectangulaire rigide, en matière isolante, munie - de manière connue - d'un circuit électrique imprimé (non représenté) qui assure les liaisons indispensables entre les différents composants électroniques 42 montés sur cette carte, ainsi qu'entre ces composants et des plages de contact 43 dont cette carte est pourvue sur l'un de ses bords. Le nombre de plages de contact 43 de la carte 41 est égal à p + 1, p étant le nombre des plages de contact P-1, P-2, P-3, etc ... du bloc 26, ces dernières plages de contact étant désignées, sur la figure 1M, par la référence générale P, pour des raisons évidentes de simplification. Ainsi, à chacune des p plages de contact du bloc 26 correspond une plage de contact de la carte 41. La (p + 1)ième plage de contact 43 de cette carte est destinée à être connectée à la barrette conductrice 37C du bloc 26, cette barrette n'étant pas représentée sur la figure 1M pour des raisons de simplification.

Comme on peut le voir sur la figure 1M, la carte de connexion 41 est pourvue en outre, sur son bord opposé à celui muni des plages de contact 43, de lamelles de contact 49 qui ont pour but de permettre à l'ensemble des composants électroniques 42 montés sur cette carte d'être raccordés à une source d'alimentation électrique ou à d'autres circuits électriques extérieurs (non représentés) faisant partie de l'unité de commande 11.

L'ensemble qui, désigné par la référence B-1 sur la figure 1M, est constitué par la carte 41 et le bloc 26, est alors placé, comme le montre la figure, à l'intérieur d'un boîtier comprenant deux capots rigides 44 et 45 pouvant être assemblés l'un à l'autre par des éléments de fixation de type connu, tels que, par exemple, des vis 46. La figure 1M montre que ces deux capots sont conformés de façon à permettre à l'ensemble B-1 et à un autre ensemble B-2, similaire à l'ensemble B-1, de pouvoir prendre place à l'intérieur de boîtier obtenu lorsque les deux capots 44 et 45 sont fixés l'un à l'autre. Cette disposition permet, comme on l'expliquera plus loin, d'obtenir un transducteur capable de former, sur un support d'enregistrement, des zones magnétisées réparties selon un pas égal à la moitié de celui G (voir figure 1A) suivant lequel les noyaux magnétiques sont répartis dans le bloc 26.

Lorsque la carte 41 et le bloc 26 constituant l'ensemble B-1 ont été mis en place dans le boîtier, on réalise alors comme on le voit sur la figure 1M, les connexions électriques entre les p plages de contact de ce bloc et les p plages de contact de cette carte d'une part, et entre la barrette conductrice 37C de ce bloc et la (p + 1)ième plage de contact de cette carte d'autre part, toutes ces connexions étant établies au moyen de fils conducteurs 48. Cette opération peut être effectuée, soit manuellement, soit, de préférence, de manière entièrement automatique, à l'aide d'une machine de câblage appropriée, de type connu.

Il faut maintenant rappeler que les têtes magnétiques qui sont incorporées à l'intérieur du bloc 26 et qui sont constituées chacune d'un noyau magnétique pourvu d'un enroulement, sont réparties suivant un pas G qui, dans l'exemple décrit, est égal à deux cent douze microns. Dans le cas où on désire réaliser un transducteur magnétique capable de former, sur un support d'enregistrement, des zones magnétisées ponctuelles réparties selon un pas de cent six microns, on utilise alors, comme le montre la figure 1M, deux ensembles B-1 et B-2 analogues, constitués chacun d'un bloc 26 et d'une carte de connexion 41, et on les place face à face, comme l'indique la figure, les blocs 26 de ces deux ensembles étant cependant positionnés l'un par rapport à l'autre de manière que l'ensemble des têtes de l'un de ces deux blocs soit décalé d'un demi-pas par rapport à l'ensemble des têtes de l'autre bloc. Lorsque cette mise en place est terminée, on assemble les deux capots 44 et 45 à l'aide des vis 46, afin d'obtenir un module rigide. Ce module est alors soumis à un contrôle destiné à vérifier le bon fonctionnement des circuits électriques qu'il comporte. Après quoi, il peut être mis en place à l'intérieur de l'appareil d'enregistrement d'informations auquel il est destiné.

Dans une variante d'exécution du procédé qui vient d'être décrit, on peut utiliser, au lieu d'une feuille métallique 18 continue, une feuille métallique 18 pourvue, comme on le voit sur la figure 7, d'évidements 56 réalisés suivant les mêmes emplacements que ceux où sont localisées les régions 32 et 33 montrées par la figure 1C.

L'intérêt de cette variante est de supprimer, dans le procédé de l'invention, les phases qui ont été décrites plus haut en se référant aux figures 1D, 1E et 1F.

Dans une autre variante d'exécution du procédé qui vient d'être décrit, on procède, après avoir soumis le bloc 26 à l'opération de gravure ionique réactive et après avoir nettoyé les spires mises à nu ainsi que la feuille métallique 18 (figure 1G), à la suppression de cette feuille métallique qui a joué le rôle de masque lors de cette opération de gravure. Cette feuille 18, qui est en cuivre dans l'exemple considéré, est éliminée par attaque au moyen d'une solution de perchlorure de fer, pendant le temps juste nécessaire à cette élimination. Cette opération, dont le résultat est illustré sur la figure 1X, a également pour effet d'attaquer les groupes de spires 29 qui ont été mises à nu. Cependant, compte-tenu du temps d'attaque et du fait que le diamètre de ces spires est notablement supérieur à l'épaisseur de la feuille 18, ces spires 29 ne sont attaquées que partiellement. On peut d'ailleurs éviter l'attaque de ces spires en déposant sur ces dernières, avant d'éliminer la feuille 18, une couche protectrice de type connu, telle qu'une couche de laque photosensible par exemple, cette couche étant ensuite retirée lorsque l'opération d'élimination de la feuille 18 est terminée. Après quoi, comme on peut le voir sur la figure 1Y, on dépose, sur la totalité de la face du bloc 26 sur laquelle se trouvait la feuille 18, une couche métallique conductrice 137, le dépôt de cette couche étant réalisé, soit par voie chimique, soit en utilisant le procédé de pulvérisation cathodique. Cette couche métallique 137, qui est constituée préférentiellement par du cuivre ou du nickel et qui a une épaisseur de l'ordre d'une vingtaine de microns, joue le même rôle que l'ensemble formé par la feuille métallique 18 et la couche conductrice 37 qui ont été représentées sur la figure 1H, c'est-à-dire que cette couche 137, qui permet aux spires constituant les premiers et les seconds groupes de spires d'êtres toutes connectées entre elles, est destinée à être gravée de manière à former, sur la face sur laquelle elle a été déposée, une série de barrettes conductrices et de plages de contact analogues à celles qui ont été représentées sur les figures 4A, 4B et 5A, 5B. Ces opérations de gravure ne seront pas décrites ici pour la raison qu'elles sont similaires à celles qui ont été mentionnées plus haut en se référant aux figures 1I à 1L.

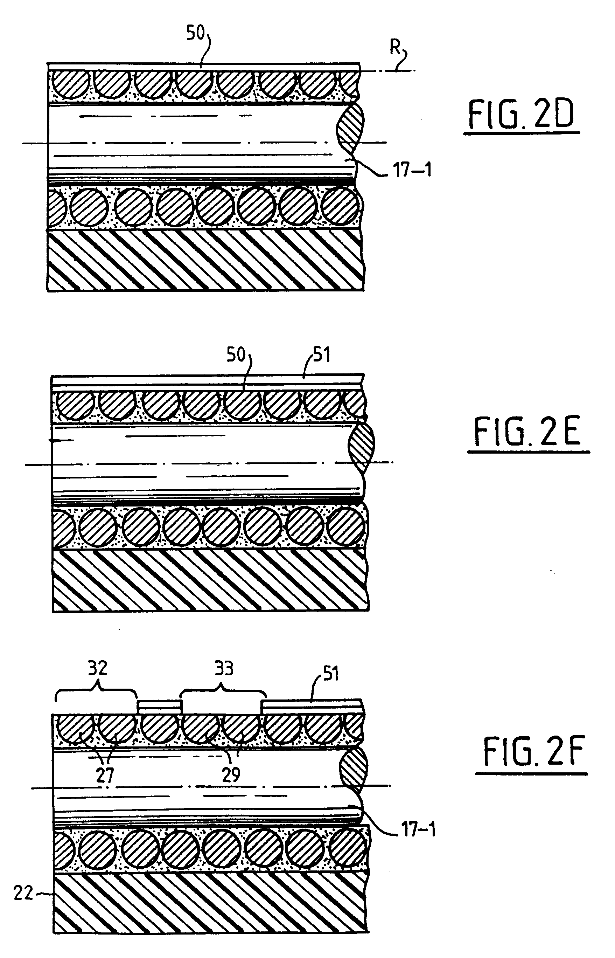

Le bloc 26 qui est destiné à être mis en place à l'intérieur du boîtier représenté sur la figure 1M, peut également être réalisé suivant un second mode d'exécution qui va être maintenant décrit en se référant aux figures 2A à 2L. Selon ce mode d'exécution, on part, comme le montre la figure 2A, d'une plaque-support 20 et de p noyaux magnétiques 17-1, 17-2,..., 17-p pourvus chacun d'un enroulement, ces enroulements étant désignés par E1, E2, ..., Ep, tous ces éléments étant similaires à ceux dont on a parlé plus haut. Après avoir revêtu la surface de cette plaque-support d'une couche 21 de matière isolante adhésive, on place, sur cette surface, comme le montre la figure 2A, les noyaux magnétiques 17-1, 17-2, ..., 17-p et leurs enroulements respectifs E1, E2, ..., Ep, les uns à côté des autres, parallèlement à la largeur M de la plaque-support 20, et de façon que ces noyaux soient disposés à intervalles réguliers, suivant un pas G égal, dans l'exemple décrit, à 212 $\mu$ m. Lorsque la fixation de ces noyaux sur la plaque-support 20 est terminée, on surmoule sur l'ensemble ainsi obtenu, comme le montre la figure 2B, une couche 25 de résine isolante, de manière que les enroulements bobinés sur ces noyaux soient complètement noyés à l'intérieur de cette couche. On obtient, après durcissement de cette résine, un bloc 26, de forme parallélépipédique, qui est représenté sur la figure 2B. Ce bloc 26, dont l'une des faces est constituée par la surface durcie 54 de la couche 25 de résine, présente deux autres faces 22 et 23, sur lesquelles apparaissent les extrémités des noyaux magnétiques. La surface 54 de ce bloc 26 est alors soumise à une rectification mécanique destinée, comme on peut le voir sur la figure 2C, à éroder la partie supérieure des spires constitutives des enroulements E1, E2, ..., Ep, et à mettre ainsi à nu toutes ces spires. Sur la figure 2C, on a indiqué par d l'écart ente la surface R obtenue par cette opération et la surface plane T qui, avant cette opération, était tangente à l'ensemble des spires des enroulements, cette distance d mesurant ainsi l'importance de la rectification effectuée. Afin que la réduction de section des spires provoquée par cette opération ne soit pas exagérée, on s'arrange pour que, en pratique, la valeur de d soit au plus égale à la moitié du diamètre D des spires. C'est ainsi que, dans l'exemple décrit, d est pratiquement égal à 0,4 D.

Lorsque cette opération est terminée, on dépose sur la surface R, comme le montre la figure 2D, une couche 50 de matière isolante. La matière qui est utilisée préférentiellement dans l'exemple décrit pour constituer cette couche 50 est une résine polyimide qui est fabriquée industriellement sous le nom de "PYRALIN" par la Société Du Pont de Nemours. On fait alors subir à cette résine une précuisson, à température modérée, ce qui a pour effet de provoquer une imidisation partielle de cette résine, puis on la recouvre, comme le montre la figure 2E, d'une pellicule 51 de laque photosensible. Après précuisson et insolation au travers d'un masque, cette pellicule de laque est développée, le masque et le type de laque utilisés étant établis de manière à ce que, à la fin de ces opérations, la pellicule 51 de laque se trouve éliminée, comme on peut le voir sur la figure 2F, des régions 32 et 33 de la couche 50 qui sont situées en regard, respectivement, des seconds groupes de spires 27 et 28 et des premiers groupes de spires 29 et 30 de chaque enroulement, ces groupes de spires étant analogues à ceux représentés sur la figure 1D. Cependant, la résine qui constitue la couche 50 possède, du fait qu'elle n'a subi qu'une polymérisation partielle, la propriété d'être attaquée par l'agent chimique utilisé pour le développement de la laque photosensible. Dans ces conditions, lorsque la pellicule 51 de laque a été éliminée par cet agent des régions 32 et 33, la couche 50, qui se trouve alors mise à nu dans ces régions, est attaquée à son tour, si bien que, en définitive, les premiers et les seconds groupes de spires se trouvent mis à nu.

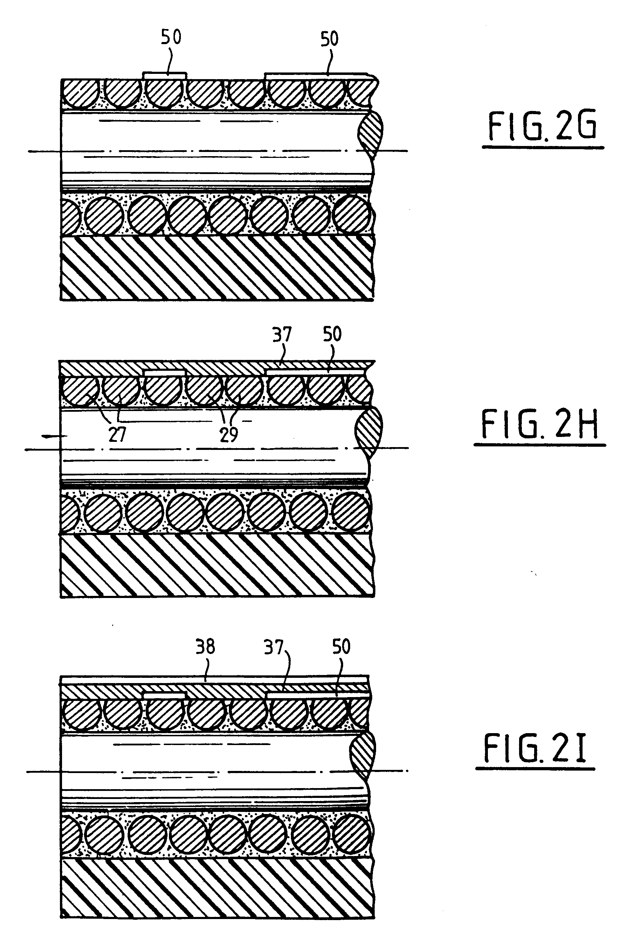

Lorsque cette opération est terminée, on retire, comme on le voit sur la figure 2G, les portions subsistantes de la laque photosensible 51, cette élimination étant réalisée de manière connue, par exemple par immersion dans de l'acétone. Après quoi, les portions subsistantes de la couche 50 de résine sont soumises à une cuisson, à une température permettant la polymérisation complète de cette résine, puis les parties mises à nu des premiers et des seconds groupes de spires sont nettoyées par trempage dans une solution de persulfate d'ammonium et sont ensuite soumises à un nettoyage ionique par bombardement d'argon.

Lorsque ce nettoyage est terminé, on dépose, comme le montre la figure 2H, sur la couche subsistante 50 et sur les régions où les spires ont été mises à nu, une couche 37 de métal conducteur. Dans l'exemple décrit, cette couche 37 est constituée par du cuivre et elle est déposée, préférentiellement, soit par voie chimique, soit par pulvérisation cathodique.

Les opérations qui sont réalisées ensuite sont similaires à celles qui ont été décrites plus haut en se référant aux figures 1I à 1M. Sans reprendre toutes les explications données précédemment, on comprendra aisément, en regardant les figures 2I à 2L, que ces opérations consistent à déposer sur la couche 37 une pellicule 38 de laque photosensible (figure 2I), laquelle, après précuisson et insolation au travers d'un masque approprié, est éliminée partiellement de la surface de la couche 37 (figure 2J), les portions non éliminées de cette pellicule formant, sur la couche 37, (p + 1) bandelettes de laque 38C, 38-1, 38-2, ..., 38-p, disposées de manière analogue à celle indiquée sur la figure 6. La couche métallique 37, ainsi partiellement revêtue de ces bandelettes de laque, est alors soumise à une gravure chimique (figure 2K), ce qui a pour effet, d'une part d'éliminer les parties de cette couche qui ne sont pas protégées par les bandelettes de laque, d'autre part de supprimer pratiquement tous les seconds groupes de spires 27 et 28 des différents enroulements. Lorsque, à la fin de cette opération, on retire les bandelettes de laque, on obtient alors un bloc 26 analogue à celui illustré sur les figures 4A et 4B, ce bloc étant pourvu, sur l'une de ses faces, de barrettes conductrices 37C, 37-1, 37-2, ..., 37-p et de p plages de contact P-1, P-2, ..., P-p, la barrette 37C et ces p plages de contact étant destinées à être connectées aux plages de contact d'une carte de connexion du type de celle désignée par la référence 41 sur la figure 1M. Cependant, avant d'effectuer ces connexions, on dépose (figure 2L), sur les plages de contact et les barrettes conductrices de ce bloc, une pellicule métallique protectrice 39.

Le bloc 26 que l'on obtient alors est soumis aux mêmes opérations (rectification des faces 22, 23, éventuellement sciage) que celles du bloc réalisé selon le premier mode d'exécution. Après quoi, ce bloc est juxtaposé à une carte de connexion 41 afin de constituer un ensemble prévu pour être mis en place à l'intérieur d'un boîtier du type de celui représenté sur la figure 1M. On établit alors les liaisons électriques entre les plages de contact de la carte et les plages de contact et la barrette 37C du bloc. Enfin, on assemble les deux capots 44 et 45 du boîtier afin d'obtenir un module rigide qui, après contrôle, peut être mis en place dans un appareil d'enregistrement d'informations.

Dans une variante d'exécution du procédé qui vient d'être décrit, on peut, au lieu de déposer une couche 50 de matière isolante sur la totalité de la surface 5, ne déposer cette couche que sur les portions de cette surface où elle est destinée à rester en permanence. L'intérêt de cette façon de faire est de supprimer, dans le procédé mis en oeuvre selon le second mode de réalisation, les phases qui ont été décrites plus haut en se référant aux figures 2D, 2E et 2F. Il faut d'ailleurs signaler que, bien que, dans l'exemple décrit, cette couche 50 soit constituée d'une résine polyimide, on pourra utiliser, pour former cette couche, toute autre matière isolante convenable, telle que, par exemple, un nitrure de bore ou de la silice.

Ainsi qu'on l'a indiqué plus haut, le masque qui, dans les deux modes d'exécution décrits ci-dessus, est utilisé pour insoler la pellicule de laque 38, présente une configuration telle que les barrettes conductrices et les plages de contact obtenues par photogravure de la couche métallique 37 sont disposées de la façon représentée sur les figures 4A et 4B. Dans cette disposition, la barrette conductrice 37C, qui est connectée aux premiers groupes de spires 30, s'étend, au-dessus de ces spires, parallèlement et à proximité de la face 23 du bloc 26, et les plages de contact P-1, P-2, ..., P-p, qui sont formées au voisinage de cette barrette 37C, sont reliées aux premiers groupes de spires 29 par l'intermédiaire des barrettes 37-1, 37-2, ..., 37-p. Il faut cependant signaler que cette disposition n'est pas exclusive de l'invention et que l'on pourrait, en employant un masque de photogravure approprié, adopter une disposition différente, telle que celle, par exemple, qui est représentée sur les figures 5A et 5B, et dans laquelle les p plages de contact P-1, P-2, ..., P-p, qui sont localisées aux mêmes emplacements que ceux qu'elles occupent sur les figures 4A et 4B, sont reliées, non plus aux premiers groupes 29 de spires, mais aux premiers groupes 30 de spires, ce qui a pour conséquence de réduire fortement la longueur des barrettes 37-1, 37-2, ..., 37-p. Dans cette disposition, la barrette conductrice 37-C, qui est connectée aux premiers groupes de spires 29, s'étend, au-dessus de ces spires, parallèlement et à proximité de l'autre face 22 du bloc 26. Etant donné, dans ces conditions, que cette barrette 37-c est relativement éloignée de la face 23 contre laquelle doit venir s'accoler la carte de connexion 41 à laquelle le bloc 26 doit être normalement raccordé, une plage de contact supplémentaire PC a été formée près de l'ensemble des plages P-1, P-2, ..., P-p, cette plage PC, reliée à la barrette 37-C par l'intermédiaire d'une bande conductrice 55, permettant ainsi de réduire la longueur du fil volant 48 nécessaire pour assurer le raccordement de cette barrette 37-C à une plage de contact correspondante de la carte de connexion.

Il faut encore signaler que, bien que dans les configurations représentées sur les figures 4A, 4B, 5A et 5B, une seule barrette conductrice 37 soit prévue pour assurer le retour des courants circulant dans les différents enroulements, on pourrait, en employant un masque de photogravure approprié, obtenir une autre configuration dans laquelle plusieurs barrettes conductrices serviraient à assurer le retour de ces courants.

Bien entendu, l'invention n'est nullement limitée aux modes de mise en oeuvre décrits et illustrés qui n'ont été donnés qu'à titre d'exemple. Au contraire, elle comprend tous les moyens constituant des équivalents techniques de ceux décrits et illustrés, considérés isolément ou en combinaison, et mis en oeuvre dans le cadre des revendications qui suivent.

## Revendications

1. Procédé pour fabriquer un transducteur magnétique adapté pour l'enregistrement et/ou la lecture d'informations sur un support magnétique (12), ce transducteur comportant au moins une rangée de p têtes magnétiques (T1, T2, T3, etc.), chacune de ces têtes étant constituée d'un noyau magnétique allongé pourvu d'un enroulement d'excitation, ce procédé consistant :
   - à former un enroulement (tel que E1) de fil conducteur isolé sur chaque noyau magnétique allongé (tel que 17-1), cet enroulement s'étendant sur toute la longueur de ce noyau et présentant deux premiers groupes de spires (29 et 30) situés respectivement au voisinage de chacune des extrémités de ce noyau, ainsi que deux seconds groupes de spires (27 et 28), localisés respectivement a proximité de chacune de ces extrémités, entre cette extrémité et le premier groupe de spires ( 29 et 30) qui est voisin de cette extrémité,
   - à réaliser au moins un bloc élémentaire (26) en disposant, sur une plaque-support (20) présentant deux bords opposés (22 et 23), p noyaux pourvus chacun d'un enroulement, de manière que ces p noyaux s'étendent entre ces deux bords,
   - et à enrober l'ensemble de ces p noyaux et de leurs enroulements dans une couche (25) de substance isolante durcissable,
   ce procédé étant caractérisé en ce qu'il consiste en outre :
   - à attaquer sélectivement la surface (54) de cette couche, après durcissement de cette substance, de manière à mettre à nu, sur chaque enroulement, lesdits premiers et seconds groupes de spires (29, 30, 27, 28) , cette attaque étant réalisée de telle sorte que ces spires ainsi mises à nu ne subissent, au plus, qu'une réduction partielle de leur section,
   - à déposer sélectivement, sur ladite surface (54) et sur les groupes de spires (29 et 30) qui ont été mis à nu, une couche conductrice (17) de façon à former des plages de contact (P-1, P-2 P-p, 37c) qui servent à raccorder ces premiers groupes de spires à un circuit électrique de commande (11).
   - et à éliminer ensuite, sur chaque enroulement, lesdits seconds groupes de spires (27 et 28).

2. Procédé pour fabriquer un transducteur magnétique selon la revendication 1, caractérisé en ce que les plages de contact formées sur la surface (54) sont réalisées de manière à constituer, d'une part p plages de contact (P-1, P-2, ..., P-p) reliées chacune respectivement à l'un des deux premiers groupes de spires de chacun des p enroulements, d'autre part, au moins une plage de contact (37-C) reliée à l'autre premier groupe de spires de chaque enroulement.

3. Procédé pour fabriquer un transducteur magnétique selon l'une quelconque des revendications 1 et 2, caractérisé en ce que , pour obtenir un positionnement des p noyaux sur la plaque-support (20), il consiste à fixer d'abord ces p noyaux munis de leurs enroulements sur une couche isolante (19) d'une feuille métallique (18), parallèlement les uns aux autres et de façon que ces noyaux soient répartis à intervalles réguliers sur cette couche isolante (19), à retourner ensuite l'ensemble ainsi obtenu et à le fixer enfin sur la plaque-support (20) de manière que les p noyaux qui sont ainsi intercalés entre cette feuille (18) et cette plaque (20) s'étendent entre les deux bords opposés (22 et 23) de cette plaque.

4. Procédé pour fabriquer un transducteur magnétique selon la revendication 3, caractérisé en ce que l'enrobage des p noyaux dans la substance isolante durcissable est réalisée en injectant ladite substance entre la plaque-support (20) et la feuille métallique (18) selon une technique d'imprégnation sous vide.

**5.** Procédé pour fabriquer un transducteur magnétique selon l'une quelconque des revendications 3 et 4, caractérisé en ce qu'il consiste en outre, avant d'entreprendre l'attaque de la couche de substance isolante (25) pour mettre à nu les premiers et les seconds groupes de spires, à éliminer les portions (32,33) de cette feuille (18) qui sont situées à l'aplomb de ces groupes de spires (27,28,29,30).

**6.** Procédé pour fabriquer un transducteur magnétique selon l'une quelconque des revendications 3 et 4, caractérisé en ce que la feuille métallique (18) est pourvue d'évidements (56) réalisés avant mise en place des p noyaux sur cette feuille et disposés de telle sorte que, lorsque ces noyaux sont fixés avec leurs enroulements sur cette feuille, ces évidements sont situés à l'aplomb des premiers groupes et des seconds groupes de spires.

**7.** Procédé pour fabriquer un transducteur magnétique selon l'une quelconque des revendications 5 et 6, caractérisé en ce qu'après mise à nu des premiers et des seconds groupes de spires, mais avant élimination des seconds groupes de spires, la couche conductrice (37) est déposée à la fois sur la feuille (18) et les spires mises à nu, de sorte que ces spires sont reliées électriquement entre elles et à la feuille (18).

**8.** Procédé pour fabriquer un transducteur magnétique selon l'une quelconque des revendications 5 et 6, caractérisé en ce qu'il consiste en outre, après mise à nu des premiers et des seconds groupes de spires, mais avant élimination des seconds groupes de spires :
- à éliminer la feuille métallique (18) et à déposer, sur toute la surface de la face du bloc (26) sur laquelle se trouvait cette feuille, une couche métallique conductrice (137) qui permet aux spires mises à nu d'être reliées entre elles par l'intermédiaire d'une matière électriquement conductrice.

**9.** Procédé pour fabriquer un transducteur magnétique selon l'une quelconque des revendications 1 et 2, caractérisé en ce que l'attaque de la surface (54) de la couche de substance isolante (25) est réalisée en soumettant cette surface à une rectification mécanique suffisante pour éroder la partie supérieure des spires constitutives des enroulements et mettre ainsi à nu toutes ces spires.

**10.** Procédé pour fabriquer un transducteur magnétique selon la revendication 9, caractérisé en ce qu'il consiste en outre, après avoir rectifié la surface (54), à déposer sur celle-ci une couche (50) de matière isolante, de telle manière que les premiers et les seconds groupes de spires (29, 30, 27, 28) ne soient pas recouverts par cette couche.

**11.** Procédé pour fabriquer un transducteur magnétique selon la revendication 10, caractérisé en ce qu'il consiste en outre, avant d'éliminer les seconds groupes de spires (27, 28), à déposer sur les spires mises à nu et sur la couche (50) de matière isolante, une couche métallique (37) qui permet à ces spires d'être reliées entre elles par l'intermédiaire d'une matière électriquement conductrice.

**12.** Procédé pour fabriquer un transducteur magnétique selon l'une quelconque des revendications 7, 8 et 11, caractérisé en ce que les (p + 1) plages de contact (37-C, P-1, P-2, .... P-p) sont obtenues par photogravure de la couche métallique (37 ou 137), cette gravure étant réalisée de façon à permettre à l'un des deux (29 par exemple) premiers groupes de spires de chaque enroulement d'être relié respectivement à l'une des p plages de contact (P-1, P-2, ..., P-p) ainsi formées, et à l'autre premier groupe de spires (30 par exemple) de chaque enroulement d'être relié à la (p + 1)ème plage de contact (37-C).

**13.** Procédé selon l'une quelconque des revendications 1 à 12, caractérisé en ce qu'il consiste en outre :
- à fixer chaque bloc élémentaire (26) contre un bord d'une carte (41) équipée d'un circuit imprimé et de composants (42) faisant partie du circuit électrique de commande (11), ce circuit imprimé étant conformé pour présenter des plages de contact (43) le long dudit bord,
- et à connecter ces plages de contact (43) aux plages de contact (P-1, P-2, ..., P-p, 37-C) dudit bloc élementaire (26).

**Claims**

**1.** A process for manufacturing a magnetic transducer suitable for recording and/or reading information on a magnetic carrier (12), this transducer comprising at least one row of p magnetic heads (T1, T2, T3, etc) each of these heads being composed of an elongated magnetic core provided with an exciting winding, this process consisting of:

- forming a winding (such as E1) of insulated conducting wire on each elongated magnetic core (such as 17-1), this winding extending over the whole length of this core and having two first groups of turns (29 and 30) located respectively close to each extremity of this core, as well as two second groups of turns (27 and 28) located respectively close to each of these extremities, between this extremity and the first group of turns (29 and 30) which is close to this extremity,
- producing at least one elementary block (26) by disposing on a support plate (20), having two opposite edges (22 and 23), p cores each provided with a winding, such that these p cores extend between these two edges,
- and coating the assembly of these p cores and their windings with a layer (25) of hardenable insulating substance,

this process being characterised in that it further consists of:

- selectively attacking the surface (54) of this layer, after this substance has hardened, so as to expose on each winding said first and second groups of turns (29, 30, 27, 28), said attack taking place in such & way that these turns thus exposed undergo, at most, only a partial reduction of their section,
- selectively depositing on said surface (54) and on the groups of turns (29 and 30) which have been exposed, a conducting layer (37) so as to form contact regions (P-1, P-2, . ., P-p, 37c) which serve to connect these first groups of turns to an electric control circuit (11),
- and then eliminating said second groups of turns (27 and 28) on each winding.

2. A process for manufacturing a magnetic transducer according to Claim 1, characterised in that the contact regions formed on the surface (54) are produced so as to constitute on the one hand p contact areas (P-1, P-2, ..., P-p) each connected respectively to one of the first groups of turns of each of the p windings, and on the other hand at least one contact region (37-C) connected to the other first group of turns of each winding.

3. A process for manufacturing a magnetic transducer according to any one of Claims 1 and 2, characterised in that, to obtain the positioning of the p cores on the support plate (20), it consists of first fixing these p cores provided with their windings on an insulating layer (19) of a metal sheet (18), parallel to one another and such that these cores are distributed at regular intervals on this insulating layer (19), subsequently turning over the assembly thus obtained and finally fixing it to the support plate (20) such that the p cores which are thus inserted between this sheet (18) and this plate (20) extend between the two opposite edges (22 and 23) of this plate.

4. A process for manufacturing a magnetic transducer according to claim 3, characterised in that the p cores are coated with the hardenable insulating substance by injecting said substance between the support plate (20) and the metal sheet (18) according to a vacuum impregnation technique.

5. A process for manufacturing a magnetic transducer according to any one of Claims 3 and 4, characterised in that it further consists, before the layer of insulating substance (25) is attacked in order to expose the first and second groups of turns, of eliminating the portions (32, 33) of this sheet (18) which are located directly above these group of turns (27, 28, 29, 30).

6. A process for manufacturing a magnetic transducer according to any one of Claims 3 and 4, characterised in that the metal sheet (18) is provided with recesses (56) produced before the p cores are put in place on this sheet and arranged such that, when these cores are fixed with their windings on this sheet, these recesses are located directly above the first groups and the second groups of turns.

7. A process for manufacturing a magnetic transducer according to any one of Claims 5 and 6, characterised in that after the first and second groups of turns are exposed, but before the second groups of turns are eliminated, the conducting layer (37) is deposited on both the sheet (18) and the exposed turns, such that these turns are electrically connected to one another and to the sheet.

8. A process for manufacturing a magnetic transducer according to any one of Claims 5 and 6, characterised in that it further consists, after the first and second groups of turns are exposed, but before the second groups of turns are eliminated, of:
- eliminating the metal sheet (18) and depositing, over the whole surface of the face of the block (26) on which this sheet lay, a conducting metal layer (137) which allows the exposed turns to be connected to one another by the intermediary of an electrically conducting material.

9.  A process for manufacturing a magnetic transducer according to any one of Claims 1 and 2, characterised in that the surface (54) of the layer of insulating substance (25) is attacked by subjecting this surface to sufficient mechanical milling to erode the upper part of the turns constituting the windings and thus exposing all these turns.

10.  A process for manufacturing a magnetic transducer according to Claim 9, characterised in that it further consists, after the surface (54) is milled, of depositing on the latter a layer (50) of insulating material, such that the first and second groups of turns (29, 30, 27, 28) are not covered by this layer.

11.  A process for manufacturing a magnetic transducer according to Claim 10, characterised in that it further consists, before the second groups of turns (27, 28) are eliminated, of depositing on the exposed turns and on the layer (50) of insulating material, a metal layer (37) which allows those turns to be connected to one another by the intermediary of an electrically conducting material.

12.  A process for manufacturing a magnetic transducer according to any one of Claims 7, 8 and 11, characterised in that the (p + 1 contact regions (37-C, P-1, P-2, ..., P-p) are obtained by photo-engraving the metal layer (37 or 137), this engraving being produced in such a way as to allow one of the two (29 for example) first groups of turns of each winding to be connected respectively to one of the p contact regions (P-1, P-2, ..., P-p) thus formed, and to the other first group of turns (30 for example) of each winding to be connected to the (p + 1)-th contact area (37-C).

13.  A process according to any one of Claims 1 to 12, characterised in that it further consists of:
    - fixing each elementary block (26) against one edge of a board (41) fitted with a printed circuit and components (42) forming part of the electric control circuit (11), this printed circuit being formed so as to have contact regions (43) along said edge.,
    - and connecting these contact regions (43) to the contact regions (P-1, P-2, ..., P-p, 37-C) of said elementary block (26).

**Patentansprüche**

1.  Verfahren zur Herstellung eines zur Speicherung und/oder zum Lesen von Informationen auf einem Magnetträger (12) geeigneten Magnetwandlers, der zumindest eine Reihe von p Magnetköpfen (T1, T2, T3, usw.) enthält, wobei jeder dieser Köpfe aus einem langgestreckten Magnetkern gebildet wird, der mit einer Erregerspule versehen ist, wobei dieses Verfahren besteht aus:
    - der Herstellung einer Spule (wie E1) aus einem isolierten Leitungsdraht über jeden magnetischen langgestreckten Kern (wie 17-1), wobei diese Spule sich über die gesamte Länge dieses Kernes erstreckt und zwei erste Gruppen von Windungen (29 und 30), die jeweils in kurzer Entfernung zur jedem der Enden dieses Kernes gelegen sind, sowie zwei zweite Gruppen von Windungen (27 und 28) aufweist, die jeweils in der Nähe jedes dieser Enden zwischen diesem Ende und der ersten Gruppe der Windungen (29 und 30), die diesem Ende benachbart ist, angeordnet sind,
    - der Herstellung zumindest eines Elementarblockes (26) durch Anordnen von p Kernen, die jeweils mit einer Spule versehen sind, auf einer Trägerplatte (20), die zwei gegenüberliegende Ränder (22 und 23) aufweist, derart daß diese p Kerne sich zwischen diesen beiden Rändern erstrecken,
    - und Einhüllen dieser Einheit aus diesen p Kernen und ihren Spulen in eine Schicht (25) aus härtbarer Isoliersubstanz,
    wobei dieses Verfahren dadurch gekennzeichnet ist, daß es weiters besteht aus:
    - selektivem Angreifen der Oberfläche (54) dieser Schicht nach dem Aushärten dieser Substanz, derart daß an jeder Spule die genannten ersten und zweiten Gruppen von Wicklungen (29, 30, 27, 28) freigelegt werden, wobei dieses Angreifen derart ausgeführt wird, daß diese so freigelegten Windungen nur höchstens eine Teilreduktion ihres Querschnittes erleiden,
    - selektivem Ablagern einer leitenden Schicht (37) auf die genannte Oberfläche (54) und auf die Gruppen von Windungen (29, 30), die freigelegt wurden, derart daß Kontaktbereiche (P-1, P-2...P-p, 37c) gebildet werden, die dazu dienen, diese ersten Gruppen von Windungen an einen elektrischen Steuerkreis (11) anzuschließen,

- und anschließendem Eleminieren an jeder Spule der zweiten Gruppe von Windungen (27 und 28).

2. Verfahren zur Herstellung eines Magnetwandlers gemäß Anspruch 1, dadurch gekennzeichnet, daß die auf die Oberfläche (54) ausgebildeten Kontaktbereiche derart hergestellt wurden, daß sie einerseits p Kontaktbereiche (P1, P-2 ...P-p) bilden, von denen jeder jeweils mit einer der beiden Gruppen jeder der p Spulen verbunden ist, andererseits zumindest einen Kontaktbereich (37-C) bilden, der mit der anderen ersten Gruppe von Windungen jeder Spule verbunden ist.

3. Verfahren zur Herstellung eines Magnetwandlers gemäß irgendeinem der Ansprüche 1 und 2, dadurch gekennzeichnet, daß es, um eine Positionierung der p Kerne auf der Trägerplatte (20) zu erhalten, darin besteht, zuvor diese mit ihren Spulen ausgestatteten p Kerne auf einer Isolierschicht (19) einer Metallfolie (18) parallel zueinander und derart daß die Kerne in regelmäßigen Abständen auf dieser Isolierschicht (19) verteilt sind, fixiert werden, dann die so erhaltene Einheit gewendet und schließlich auf der Trägerplatte (20) fixiert wird, derart daß die p Kerne, die so zwischen dieser Folie (18) und dieser Platte (20) eingelagert sind, sich zwischen den beiden gegenüberliegenden Rändern (22 und 23) dieser Platte erstrecken.

4. Verfahren zur Herstellung eines Magnetwandlers gemäß Anspruch 3, dadurch gekennzeichnet, daß Einhüllen der p Kerne in die härtbare Isoliersubstanz durch Einspritzen der genannten Substanz zwischen die Trägerplatte (20) und die Metallfolie (18) gemäß einer Vakuumtränkungstechnik realisiert wird.

5. Verfahren zur Herstellung eines Magnetwandlers gemäß irgendeinem der Ansprüche 3 und 4, dadurch gekennzeichnet, daß es weiters daraus besteht, daß vor dem Inangriffnehmen des Angreifens der Isoliersubstanzschicht (25) zum Freilegen der ersten und der zweiten Gruppen von Windungen die Abschnitte (32, 33) dieser Folie (18), die senkrecht zu diesen Gruppen von Windungen (27, 28, 29, 30) gelegen sind, entfernt werden.

6. Verfahren zur Herstellung eines Magnetwandlers gemäß irgendeinem der Ansprüche 3 und 4, dadurch gekennzeichnet, daß die Metallfolie (18) mit Ausnehmungen (56) versehen ist, die vor dem Anordnen der p Kerne auf dieser Folie hergestellt wurden und derart angeordnet sind, daß, wenn die Kerne mit ihren Spulen auf dieser Folie befestigt werden, diese Ausnehmungen senkrecht über den ersten Gruppen und den zweiten Gruppen von Windungen gelegen sind.

7. Verfahren zur Herstellung eines Magnetwandlers gemäß irgendeinem der Ansprüche 5 und 6, dadurch gekennzeichnet, daß nach dem Freilegen der ersten und zweiten Gruppen von Windungen, aber vor der Entfernung der zweiten Gruppen von Windungen, die leitende Schicht (37) auf einmal auf die Folie (18) und die freigelegten Windungen abgelegt wird, derart daß diese Windungen elektrisch untereinander und mit der Folie (18) verbunden sind.

8. Verfahren zur Herstellung eines Magnetwandlers gemäß irgendeinem der Ansprüche 5 und 6, dadurch gekennzeichnet, daß es weiters daraus besteht, daß nach dem Freilegen der ersten und der zweiten Gruppen von Windungen, aber vor der Elimination der zweiten Gruppe von Windungen

- die Metallfolie (18) eliminiert wird und auf die gesamte Oberfläche der Fläche des Blockes (26), auf welcher sich diese Folie befunden hat, eine leitende metallische Schicht (137) aufgelegt wird, die es den freigelegten Windungen ermöglicht, untereinander mittels eines elektrisch leitenden Materials verbunden zu sein.

9. Verfahren zur Herstellung eines Magnetwandlers gemäß irgendeinem der Ansprüche 1 und 2, dadurch gekennzeichnet, daß das Angreifen der Oberfläche (54) der Isolationssubstanzschicht (25) dadurch verwirklicht wird, daß diese Oberfläche einem mechanischen Abreiben unterworfen wird, das genügt, um den oberen Teil der die Spulen bildenden Windungen abzutragen und so alle diese Windungen freizulegen.

10. Verfahren zur Herstellung eines Magnetwandlers gemäß Anspruch 9, dadurch gekennzeichnet, daß es weiters daraus besteht, daß nachdem die Oberfläche (54) abgerieben wurde, auf dieselbe eine Schicht (50) aus Isolationsmaterial aufgebracht wird, derart daß die ersten und die zweiten Gruppen der Windungen (29. 30, 27, 28) nicht wieder durch diese Schicht bedeckt werden.

**11.** Verfahren zur Herstellung eines Magnetwandlers gemäß Anspruch 10, dadurch gekennzeichnet, daß es im weiteren daraus besteht, daß vor der Elimination der zweiten Gruppen der Windungen (27, 28) auf die freigelegten Windungen und auf die Schicht (50) aus Isoliermaterial eine Metallschicht (37) aufgebracht wird, die es diesen Windungen ermöglicht, untereinander mit Hilfe eines elektrisch leitenden Materials verbunden zu sein.

**12.** Verfahren zur Herstellung eines Magnetwandlers gemäß irgendeinem der Ansprüche 7, 8 und 11, dadurch gekennzeichnet, daß die (p + 1) Kontaktbereiche (37-C, P-1, P-2 ... P-p) durch Fotogravur der metallischen Schicht (37 oder 137) erhalten werden, wobei diese Gravur derart verwirklicht wird, daß sie einer der beiden ersten Gruppen (z. B. 29) der Windungen jeder Spule ermöglicht, jeweils mit einer der so gebildeten p Kontaktbereich (P-1, P-2 ... P-p) verbunden zu sein und der anderen ersten Gruppe der Windungen (z.B. 30) jeder Spule ermöglicht, mit dem (p + 1) Kontaktbereich (37-C) verbunden zu sein.

**13.** Verfahren zur Herstellung eines Magnetwandlers gemäß einem der Ansprüche 1 bis 12, dadurch gekennzeichnet, daß es im weiteren daraus besteht:
- jeden Elementarblock (26) gegen einen Rand einer Karte (41) zu fixieren, die mit einer aufgedruckten Schaltung und Bauteilen (42) ausgerüstet ist, die Teil einer elektrischen Steuerschaltung (11) sind, wobei die aufgedruckte Schaltung abgestimmt ist, um die Kontaktbereiche (43) entlang der Kante darzustellen,
- und diese Kontaktbereiche (43) mit den Kontaktbereichen (P-1, P-2 ...P-p, 37-C) der genannten Elementarblöcke (26) zu verbinden.

FIG.1A

FIG.1B

FIG.1C

## FIG.1D

27  18  29  31  E3  17-3  30  28

22  23

## FIG.1E

32  33  18

27  29

## FIG.1F

54  34  31  35  18  31

FIG.1G

FIG.1H

FIG.1I

FIG.1J

FIG.1K

FIG.1L

# FIG.1M

FIG.1X

27    29

FIG.1Y

137

27    29

FIG.3

11    10    A'    12

17    T5

E    T4    D

13    T3

T2

T1

A

FIG.2A

FIG.2B

FIG.2C

FIG. 2D

FIG. 2E

FIG. 2F

FIG.2G

FIG.2H

FIG.2I

FIG.2J

FIG.2K

FIG.2L

FIG.4A

EP 0 277 439 B1

# FIG. 4B

P1 P2 37c P3 E4 P4 47 30 23 20

EP 0 277 439 B1

FIG. 5A

# FIG.5B

EP 0 277 439 B1

## FIG.6

## FIG.7